(19) Europäisches Patentamt
European Patent Office
Office européen des brevets

(11) **EP 4 579 429 A1**

(12) **EUROPEAN PATENT APPLICATION**

(43) Date of publication:
**02.07.2025 Bulletin 2025/27**

(21) Application number: **24223283.3**

(22) Date of filing: **26.12.2024**

(51) International Patent Classification (IPC):
**G06F 3/12** *(2006.01)* **B41J 2/175** *(2006.01)*
**G03G 15/08** *(2006.01)*

(52) Cooperative Patent Classification (CPC):
**G06F 3/1211; G06F 3/1232; G06F 3/1273;**
**G06F 3/1279;** B41J 2/17546; G03G 15/0863;
G06F 3/1253

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.12.2023 CN 202311843970**
**09.10.2024 CN 202411404293**

(71) Applicant: **Zhuhai Pantum Electronics Co., Ltd.**
**Zhuhai, Guangdong (CN)**

(72) Inventor: **XIE, Congse**
**Zhuhai (CN)**

(74) Representative: **Sun, Yiming**
**HUASUN Patent- und Rechtsanwälte**
**Friedrichstraße 33**
**80801 München (DE)**

(54) **INFORMATION PROCESSING DEVICE, CONSUMABLES, CONTROL METHOD AND IMAGE FORMING DEVICE**

(57)    Embodiments of the present disclosure provide an information processing device, consumables, a control method and an image forming device. The data transmission rate between the image forming device and a consumable is determined by an information processing device. After obtaining a first communication speed determined by the information processing device, the image forming device adjusts a data transmission rate with the consumable according to the first communication speed, thereby increasing a probability of successful communication between the consumable and the image forming device.

```
                                                    ┌──── S601
┌──────────────────────────────────────────────┐
│   Acquire first variable data of consumable    │
└──────────────────────────────────────────────┘
                      │
                                                    ┌──── S602
┌──────────────────────────────────────────────┐
│ Determine first communication speed according  │
│           to first variable data               │
└──────────────────────────────────────────────┘
                      │
                                                    ┌──── S603
┌──────────────────────────────────────────────┐
│ Send first communication speed to image        │
│            forming device                       │
└──────────────────────────────────────────────┘
```

FIG. 6

EP 4 579 429 A1

## Description

## TECHNICAL FIELD

The present application relates to the field of image forming technology, and in particular to an information processing device, consumables, a control method and an image forming device.

## BACKGROUND

With the development of printing imaging technology, image forming devices such as printers, copiers, fax machines, word processors, and the like have been widely used. Image forming devices are equipped with replaceable items (e.g., ink, toner, etc.) for accommodating imaging materials (e.g., ink, toner, etc.) for users to replace, namely consumables (e.g., imaging cartridges), where the consumables are usually provided with consumable chips.

In the existing technologies, after an image forming device communicates with the consumable chip, the image forming device usually obtains imaging control parameters from the consumable chip for subsequent imaging control. However, the applicant has found that the contacts of the consumable chip have increased contact impedance due to scratches caused by plugging and unplugging during use, surface oxidation, and other factors, which in turn leads to poor contact with the image forming device, thereby reducing the probability of successful communication between the consumable and the image forming device. Repeated retries will result in long printing output time, causing inconvenience to users.

## SUMMARY

In view of the above, the present disclosure provides an information processing device, consumables, a control method and an image forming device, to increase the probability of successful communication between the consumables and the image forming device.

A first aspect of the present disclosure provides an information processing device, including: an acquisition unit, configured to acquire first variable data of a consumable; a determination unit, configured to determine a first communication speed based on the first variable data, the first communication speed being used to determine a data transmission rate between an image forming device and the consumable, so that the data transmission rate is related to a change degree of the first variable data; and a transmission unit, configured to send the first communication speed to the image forming device.

In an optional embodiment, the determination unit is specifically configured to use a communication speed having a preset corresponding relationship with the first variable data as the first communication speed.

In an optional embodiment, the determination unit is specifically configured to determine a data interval to which the first variable data belongs; and a communication speed having a preset corresponding relationship with the data interval is used as the first communication speed.

In an optional embodiment, the determination unit is specifically configured to determine a change degree of the first variable data; and the transmission unit is further configured to send a value of the change degree of the first variable data to the image forming device.

In an optional embodiment, a difference between a value of the change degree of the first variable data and a ratio of the first variable data to an original total amount of the first variable data is within a preset range.

In an optional embodiment, the acquisition unit is specifically configured to acquire the first variable data from the image forming device.

In an optional embodiment, the transmission unit is further configured to feed back second variable data to the image forming device when a variable data acquisition request sent by the image forming device is obtained, where the second variable data is used to obtain the first variable data.

In an optional embodiment, the first variable data includes the number of printed pages, and a difference between the value of the change degree of the first variable data and a ratio of the number of printed pages to a theoretical total number of printable pages is within a preset range.

In an optional embodiment, the value of the change degree of the first variable data is the same as the ratio of the number of printed pages to the theoretical total number of printable pages.

In an optional embodiment, the acquisition unit is further configured to acquire verifying variable data sent by the image forming device; the determination unit is further configured to determine a verifying first communication speed based on the verifying variable data, where the verifying first communication speed is different from the first communication speed; and the transmission unit is further configured to send the verifying first communication speed to the image forming device.

A second aspect of the present disclosure also provides an information processing method, and the method includes acquiring first variable data of a consumable; determining a first communication speed based on the first variable data, the first communication speed being used to determine a data transmission rate between the image forming device and the consumable, so that the data transmission rate is related to a change degree of the first variable data; and sending the first communication speed to the image forming device.

In an optional embodiment, determining the first communication speed based on the first variable data includes using a communication speed having a preset corresponding relationship with the first variable data as the first communication speed.

In an optional embodiment, using a communication speed having a preset corresponding relationship with the first variable data as the first communication speed includes determining a data interval to which the first variable data belongs; using a communication speed having a preset correspondence with the data interval as the first communication speed.

In an optional embodiment, the method further includes determining a change degree of the first variable data; and sending a value of the change degree of the first variable data to the image forming device.

In an optional embodiment, a difference between the value of the change degree of the first variable data and a ratio of the first variable data to an original total amount of the first variable data is within a preset range.

In an optional embodiment, obtaining the first variable data of the consumable includes receiving the first variable data from the image forming device.

In an optional embodiment, the method further includes, when a variable data acquisition request sent by the image forming device is acquired, feeding back second variable data to the image forming device, where the second variable data is used to obtain the first variable data.

In an optional embodiment, the first variable data includes the number of printed pages, and the difference between the value of the change degree of the first variable data and a ratio of the number of printed pages to a theoretical total number of printable pages is within a preset range.

In an optional embodiment, the value of the change degree of the first variable data is the same as the ratio of the number of printed pages to the theoretical total number of printable pages.

In an optional embodiment, the method further includes receiving verifying variable data sent by the image forming device; determining a verifying first communication speed based on the verifying variable data, the verifying first communication speed being different from the first communication speed; and sending the verifying first communication speed to the image forming device.

A third aspect of the present disclosure also provides a consumable, including a housing; a developer accommodating portion, located in the housing, for accommodating a developer; and an information processing device as described in any one of the first aspects.

In an optional embodiment, the consumables further include a developer conveying element used for conveying the developer.

In an optional embodiment, the consumables further include a photosensitive drum; and a charging roller used for charging the photosensitive drum.

A fourth aspect of the present disclosure also provides a consumable material, including a photosensitive drum; a charging roller for charging the photosensitive drum; and an information processing device as described in any one of the first aspects.

A fifth aspect of the present disclosure further provides a data transmission control method, which is applied to an image forming device, where a consumable is detachably installed on the image forming device, and the method includes acquiring a first communication speed, where the first communication speed is determined based on first variable data of the consumable; verifying the first communication speed; and when the first communication speed is verified, setting a data transmission rate between the image forming device and the consumable according to the first communication speed so that the data transmission rate is related to a change degree of the first variable data of the consumable.

In an optional embodiment, verifying the first communication speed includes acquiring first variable data of the consumable; determining a theoretical communication speed according to the first variable data; and when a difference between the first communication speed and the theoretical communication speed is within a preset range, determining that the first communication speed is successfully verified.

In an optional embodiment, determining the theoretical communication speed according to the first variable data includes using a communication speed having a preset corresponding relationship with the first variable data as the theoretical communication speed.

In an optional embodiment, using a communication speed having a preset corresponding relationship with the first variable data as the theoretical communication speed includes determining a data interval to which the first variable data belongs; and using a communication speed having a preset corresponding relationship with the data interval as the theoretical communication speed.

In an optional embodiment, the method further includes controlling the image forming device to communicate with the consumable at a third communication speed, where the third communication speed is different from the first communication speed; and when the image forming device fails to communicate with the consumable at the third communication speed, controlling the image forming device to communicate with the consumable at the first communication speed; or when the image forming device successfully communicates with the consumable at the third communication speed, setting the third communication speed as the data transmission rate between the image forming device and the consumable.

In an optional embodiment, the method further includes determining whether the data transmission rates between the image forming device and a plurality of the loaded consumables are the same; when the data transmission rates between the image forming device and the plurality of the loaded consumables are the same, communicating with all the consumables at the smallest data transmission rate among the corresponding data transmission rates of the plurality of consumables.

In an optional embodiment, the method further includes sending verifying variable data to the consumable; and receiving a verifying first communication speed determined by the consumable based on the verifying variable data; verifying the verifying first communication speed; and when the first communication speed and the verifying first communication speed are successfully verified, setting a data transmission rate between the image forming device and the consumable according to the first communication speed.

A sixth aspect of the present disclosure further provides an image forming device, including a controller, where the controller is configured to execute the method described in any method of the fifth aspect.

A seventh aspect of the present disclosure provides a controller for executing any technical solution of the present disclosure.

According to the solutions provided in the present disclosure, the data transmission rate between the image forming device and a consumable is determined by the information processing device based on the first variable data, so that the data transmission rate is related to the change degree of the first variable data. After obtaining the first communication speed sent by the information processing device, the image forming device adjusts the data transmission rate with the consumable according to the first communication speed, which can increase the probability of successful communication between the consumable and the image forming device.

**BRIEF DESCRIPTION OF THE DRAWINGS**

In order to more clearly illustrate the technical solutions of the embodiments of the present disclosure, the drawings essential for use in the embodiments are briefly introduced below. Obviously, the drawings described below are merely some embodiments of the embodiments of the present disclosure. For ordinary technicians in this field, other drawings may be obtained based on these drawings without creative work.

FIG. 1 is a structural block diagram of an image forming system in accordance with an embodiment of the present disclosure;

FIG. 2 is a schematic structural diagram of another image forming system in accordance with an embodiment of the present disclosure;

FIG. 3 is a schematic structural diagram of another image forming system in accordance with an embodiment of the present disclosure;

FIG. 4 is a schematic structural diagram of an image forming device in accordance with an embodiment of the present disclosure;

FIG. 5 is a schematic structural diagram of an information processing device in accordance with an embodiment of the present disclosure;

FIG. 6 is a flow chart of an information processing method in accordance with an embodiment of the present disclosure;

FIG. 7 is a flow chart of another information processing method in accordance with an embodiment of the present disclosure;

FIG. 8 is a flow chart of another information processing method in accordance with an embodiment of the present disclosure;

FIG. 9 is a flow chart of another information processing method in accordance with an embodiment of the present disclosure;

FIG. 10 is a flow chart of a data transmission control method in accordance with an embodiment of the present disclosure;

FIG. 11 is a flow chart of another data transmission control method in accordance with an embodiment of the present disclosure;

FIG. 12 is a flow chart of another data transmission control method in accordance with an embodiment of the present disclosure;

FIG. 13 is a flow chart of another data transmission control method in accordance with an embodiment of the present disclosure;

FIG. 14 is a flow chart of another data transmission control method in accordance with an embodiment of the present disclosure;

FIG. 15 is a schematic structural diagram of a consumable in accordance with an embodiment of the present disclosure;

FIG. 16 is a schematic structural diagram of another consumable in accordance with an embodiment of the present disclosure;

FIG. 17 is a schematic structural diagram of another consumable in accordance with an embodiment of the present disclosure;

FIG. 18 is a schematic structural diagram of another consumable in accordance with an embodiment of the present disclosure;

FIG. 19 is a schematic structural diagram of another consumable in accordance with an embodiment of the present disclosure; and

FIG. 20 is a structural block diagram of an image forming device in accordance with an embodiment of the present disclosure.

## DETAILED DESCRIPTION

In order to better understand the technical solutions of the present disclosure, the embodiments of the present disclosure are described in detail hereinafter with reference to the accompanying drawings.

It should be clear that the described embodiments are merely part of the embodiments of the present disclosure, rather than all the embodiments. Based on the embodiments in the present disclosure, all other embodiments obtained by ordinary technicians in this field without taking creative efforts fall within the scope of protection of the present disclosure.

Unless specifically stated otherwise, the relative arrangement of components and steps, the numerical expressions and numerical values set forth in these embodiments do not limit the scope of the present disclosure.

The terms used in the embodiments of the present disclosure are merely for the purpose of describing specific embodiments, and are not intended to limit the present disclosure. The singular forms "a", "the", and "said" used in the embodiments of the present disclosure and the appended claims are also intended to include plural forms, unless the context clearly indicates other meanings.

It should be understood that the term "and/or" used in this specification is merely a description of the association relationship of associated objects, indicating that there may be three relationships. For example, A and/or B may represent: A exists alone, A and B exist at the same time, and B exists alone. In addition, the character "/" in this article generally indicates that the associated objects before and after are in an "or" relationship.

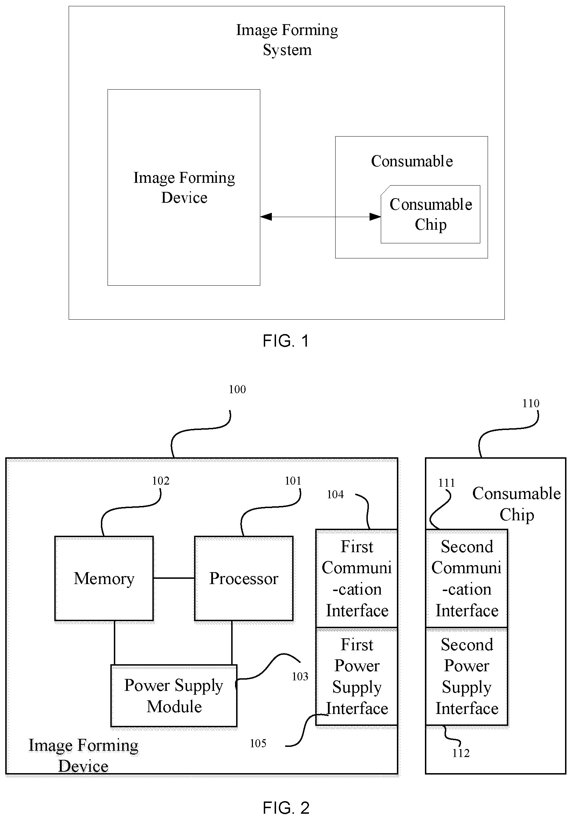

FIG. 1 is a block diagram of an image forming system in accordance with an embodiment of the present disclosure. As shown in FIG. 1, the image forming system includes an image forming device and consumables. The image forming device is a part of the image forming system that performs image forming operations, and the consumables are replaceable accessories in the image forming system. For example, when the image forming device is an inkjet printer, a laser printer, a 3D printer, a label printer, or a dot matrix printer, the consumables are ink cartridges, toner cartridges, toner cartridges, toner cartridges, ribbon cartridges, etc.

In one embodiment, a consumable is of a split structure, including a drum box and a developer box that are detachable from each other, where the drum box includes a photosensitive drum and a charging roller, and the developer box includes a developer accommodating portion, a developer roller, and a developer conveying element. In another embodiment, a consumable is of an integrated structure, for example, the consumable includes a developer accommodating portion, a developer roller, a developer conveying element, a photosensitive drum, a charging roller, etc.

Furthermore, a consumable may also include merely a housing and a developer accommodating portion. It is also to be noted that a consumable may also be the developer box or drum box described above. The developer accommodating portion is used to accommodate a developer such as a toner, and the developer conveying element is a component such as a powder feeding roller, a powder feeding screw, etc., for stirring and/or conveying toner. Apparently, the developer box may also include merely the developer accommodating portion, which is not limited here. Furthermore, the developer box may also include merely the developer accommodating portion and the developer conveying element, which is not limited here.

In one embodiment, a consumable may also include a powder cartridge and/or an imaging component. The powder cartridge is used to deliver toner to the imaging component when the toner contained in the imaging component is insufficient so that the image forming device forms an image based on the toner delivered by the imaging component. When the consumable is a powder cartridge, the consumable may merely include a housing and a developer accommodating portion, or may include a housing, a developer accommodating portion, and a developer conveying element, which is not limited in this disclosure. When the consumable is an imaging component, the consumable may include a housing, a developer accommodating portion, a developer conveying element, a charging roller, a photosensitive drum, etc. A developer transmission channel is provided between the developer accommodating portion and the imaging component, which is not limited in the embodiments of the disclosure.

It should be noted that the consumables mentioned in the embodiments of the present disclosure may also be other components, parts, units (e.g., paper boxes, etc.) in the image forming device that are easily damaged and need to be replaced, which also belong to the technical solutions corresponding to the consumables protected by this disclosure.

In order to facilitate the management of consumables, the consumables are also used in conjunction with consumable chips, which are electronic devices with storage functions. In one embodiment, a consumable chip may be installed on a consumable, and the consumable chip may be installed on the consumable before the consumable leaves the factory, or a consumable chip may be installed on a consumable by users after the consumable leaves the factory. In another embodiment, a consumable chip does not need to be installed on a consumable, but is fixed to the image forming device by a mounting member or an adhesive. When the image forming device uses the consumable, the contact points of the consumable chip are electrically contacted with the contact terminals corresponding to the image forming device, thereby realizing the electrical connection between the consumable chip and the image forming device. When the image forming device does not use the consumable (e.g., the consumable is not in a working state, for example, when the consumable is installed in the image forming device but is not used, or when the consumable is taken out of the image forming device), the contact points of the consumable chip may or may not be in contact with the contact terminals corresponding to the image forming device. It should be noted that when a consumable is of the split structure including a drum box and a developer box that are detachable from each other, the drum box and the developer box are usually respectively equipped with consumable chips.

When a consumable is installed on the image forming device, the consumables chip is connected to the image forming device for communication. The communication connection may be a communication connection through contacts, antennas or coils, which is not limited in the embodiments of the present disclosure. It should be noted that the consumables chip stores information including raw data, where the raw data is information related to the image forming system. For example, the raw data may include at least one of the following categories: 1) imaging control related parameters, such as printing engine control parameter information, specifically high voltage control parameters, fixing temperature parameters, paper feed speed control parameters, etc.; when the image forming device is a color printer, the raw data also includes color calibration parameter information or calibration patterns; 2) consumable related parameters, such as various proportional factors for calculating toner consumption or basic attribute information of the consumable, where the basic attribute information of the consumable may specifically be information such as the model of the consumable, the serial number of the consumable, and the capacity and life of the consumable. It should be noted that those skilled in the art may also design the consumable chip to store other types of raw data according to actual needs, which is not limited in the embodiments of the present disclosure.

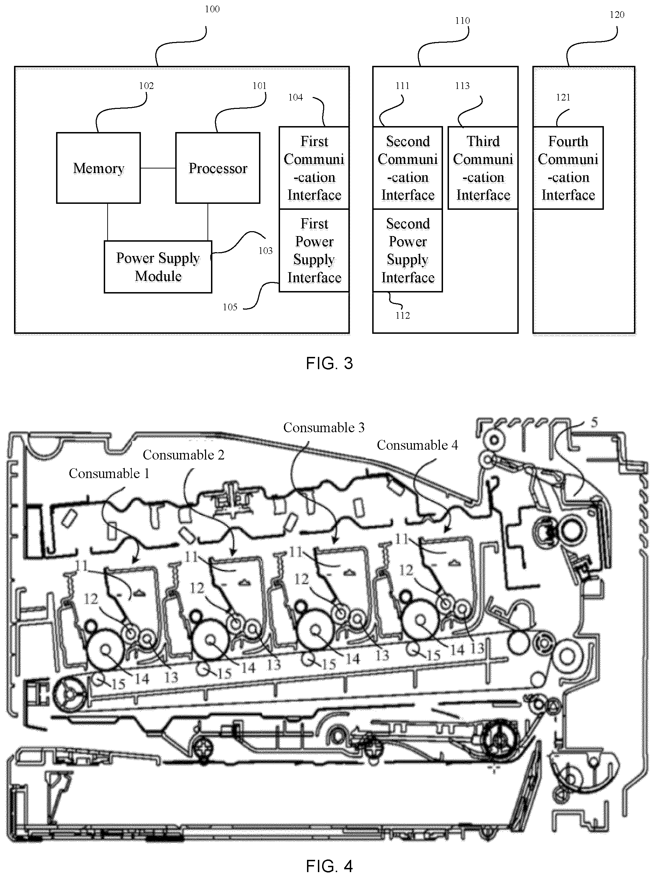

In one embodiment, the information processing device described in the embodiments of the present disclosure is a consumable chip or a consumable chipset. When the consumable chip is electrically connected to the image forming device, the consumable chip may communicate with the image forming device, and the consumable chip may provide information related to the consumable to the image forming device, so that the image forming device may obtain basic information about the consumable, such as the manufacturer, the type, color, capacity and usage of the recording material (e.g., toner, ink), etc. In addition, during the image forming operation, the image forming device may also write the updated information of the consumable (e.g., the usage of the developer) into the consumable chip. In one embodiment, the consumable chip includes a substrate and a plurality of contact points, the plurality of contact points are disposed on the substrate, and each contact point is respectively used to be electrically connected to a plurality of contact terminals disposed on the image forming device, thereby realizing communication between the image forming device and the consumable chip. The plurality of contact points may include a power contact VCC, a ground contact GND, a data line contact SDA, and a clock line contact SCL. In one embodiment, the consumable chip in the embodiments of the present disclosure may also include an adapter plate in addition to the substrate, where the adapter plate is electrically connected to the substrate, and the multiple contact points may be at least partially disposed on the adapter plate. Specifically, referring to FIG. 2, the second communication interface 111 of the consumable chip 110 may be electrically connected to the first communication interface 104 of the image forming device 100, thereby being electrically connected to the processor 101 of the image forming device 100 through the first communication interface 104. In one embodiment, the first communication interface 104 and the second communication interface 111 may be 12C interfaces, respectively. The second power supply interface 112 of the consumable chip 110 may be electrically connected to the first power supply interface 105 of the image forming device 100, so that the image forming device 100 may power the consumable chip 110 through the first power supply interface 105 and the second power supply interface 112. In one embodiment, the information processing device described in the present disclosure includes a first consumable chip and a second consumable chip. In one embodiment, referring to FIG. 3, the first consumable chip 110 (the first consumable chip is the consumable chip in FIG. 2) and the second consumable chip 120 are communicatively connected. When the image forming device 100 communicates with the first consumable chip 110, the image forming device 100 acts as a host to send instructions to the first consumable chip 110, and the first consumable chip 110 acts as a slave to respond to the instructions sent by the host. When the first consumable chip 110 and the second consumable chip 120 communicate, the first consumable chip 110 acts as a host to send instructions to the second consumable chip 120, and the second consumable chip 120 acts as a slave to respond to the instructions sent by the first consumable chip 110. The instructions sent by the first consumable chip 110 to the second consumable chip 120 may be generated by the first consumable chip 110, or the first consumable chip 110 may forward the instructions sent by the image forming device 100. At this moment, the first consumable chip 110 determines who should process the instructions sent by the image forming device 100, and when it is determined that the instructions should be processed by the second consumable chip 120, the instructions are forwarded to the second consumable chip 120. The third communication interface 113 of the first consumable chip 110 may be electrically connected to the fourth communication interface 121 of the second consumable chip 120. In one embodiment, the third communication interface 113 and the fourth communication interface 121 may be wired communication interfaces, preferably I2C interfaces, or optical, infrared or other appropriate information transmission path interfaces. In one embodiment, a switch controlled by the first consumable chip is provided in the communication link between the first consumable chip and the second consumable chip and the image forming device. When the first consumable chip determines that the first consumable chip needs to communicate with the image forming device at the current stage, the communication link between the first consumable chip and the image forming device is connected by the switch, or the communication link between the first consumable chip and the image forming device is kept connected. When the first consumable chip determines that the second consumable chip needs to communicate with the image forming device at the current stage, the communication link between the second consumable chip and the image forming device is connected by the switch. When the first consumable chip determines that the second consumable chip does not need to communicate with the image forming device at the current stage, the communication link between the second consumable chip and the image forming device is disconnected by the switch. The information processing device described in the embodiment of the present disclosure may include a chipset, and the chipset includes a first consumable chip 110 and a second consumable chip 120.

In one embodiment, the information processing device described in the present disclosure includes the consumable chip or consumable chipset and an auxiliary circuit module. The consumable chip is connected to the auxiliary circuit module, and may be connected through a wired communication interface, or may be connected through an optical, infrared or other appropriate information transmission path interface. The auxiliary circuit module is configured to implement some functions of the consumable chip or additional functions. The auxiliary circuit module may respond to the instruction of the consumable chip, or be enabled by a signal other than the instruction of the consumable chip, to provide the consumable chip or the main device with corresponding data information or waveform information and other information. The auxiliary circuit module may include logic units such as AND gate, OR gate, NOT gate, trigger, etc., and may also include circuit units such as field programmable gate array (FPGA), microcontroller unit (MCU), digital signal processing (DSP), etc. Those skilled in the art may design the auxiliary circuit module according to actual needs.

The embodiment of the present disclosure does not limit the composition and specific functions of the auxiliary circuit module.

It should be noted that when the image forming device can be installed with multiple consumables, each consumable is provided with an information processing device, or some of the consumables are provided with an information processing device. That is, there may be a one-to-one relationship between the consumables and the information processing devices. For example, the image forming device may be installed with 6 consumables, and each of the 6 consumables is provided with an information processing device. There may also be a one-to-many relationship between the consumables and the information processing devices. For example, the image forming device may be installed with 6 consumables, and one of the consumables is provided with an information processing device. The information between the 6 consumables and the image forming device is processed by the information processing device. For example, the information processing device stores the information corresponding to the 6 consumables. For another example, the information processing device provides the image forming device with the information corresponding to the 6 consumables. For another example, the information processing device receives the information corresponding to the 6 consumables sent by the image forming device, etc.

Furthermore, the image forming device includes an image forming control unit and an image forming unit, where the image forming control unit is configured to control the image forming device as a whole, and the image forming unit is configured to form an image on a conveyed paper based on image data under the control of the image forming control unit.

The image forming control unit may be a system-on-chip (SoC), which is a miniature system composed of components of multiple systems and is configured to control the imaging processing operations of the image forming device, such as linear correction, noise reduction, bad pixel removal, detail enhancement, etc., to improve the quality of image output. The image forming control unit is also configured to perform processing operations related to data transmission and reception, command transmission and reception, and engine control of printing images, such as transmitting and receiving data, printing engine control commands, status, etc., through an interface unit (including but not limited to a USB port, a wired network port, a wireless network port, or other interfaces, etc.).

FIG. 4 is a schematic structural diagram of an image forming device in accordance with an embodiment of the present disclosure. As shown in FIG. 4, the image forming unit of the image forming device may include: a developer accommodating portion 11, a developing unit 12, a developer conveying element 13, a photosensitive unit 14, a transfer unit 15, and a fixing assembly 5, etc. The paper to be printed moves in the paper feeding direction, and after successively undergoing the powder feeding operation of the developer conveying element 13 and the developing operation of the developing unit 12, it reaches the clamping area between the photosensitive unit 14 and the transfer unit 15 for transfer, and then undergoes fixing through the fixing assembly 5 to complete the image forming operation, where the developer accommodating portion 11 is used to contain the developer, and the developer may be a material such as toner or carbon powder. The developing unit 12 includes a developing roller and so on. The developer conveying element 13 includes a powder conveying roller and so on. The photosensitive unit 14 includes a photosensitive drum organic photo conductor (OPC), a charging roller and so on, where the charging roller is configured to charge the photosensitive drum.

Typically, an image forming device is detachably installed with at least one consumable. Taking the image forming device shown in FIG. 4 as an example, the image forming device is detachably installed with four consumables (i.e., consumable 1, consumable 2, consumable 3 and consumable 4 shown in FIG. 2, respectively), and the four consumables are used to provide the image forming device with four colors of developers, namely black K, cyan C, magenta M and yellow Y. Apparently, in other embodiments, the number of consumables installed in the image forming device may be increased or decreased, for example, to 5 or 6 or even more or less, etc., which is not limited in the present disclosure.

During actual use, the contact impedance of a consumable chip will increase due to scratches caused by plugging and unplugging, surface oxidation and other factors during use, resulting in poor contact between the consumable chip and the imaging device, and thus reducing the probability of successful communication between the consumable chip and the image forming device. When the image forming device fails to successfully communicate with the consumable, it will continue to try to communicate with the consumable until the image forming device can successfully communicate with the consumable. Or if it still cannot successfully communicate with the consumable within a certain number of retries, the image forming device reports a fault. However, the repeated retry process will result in a long recognition time, and then a long printing output time, causing inconvenience to the user.

In the process of analyzing the problem, the applicant has found that the probability of successful identification of a consumable is related to the communication speed between the image forming device and the consumable chip, and the current communication speed between the image forming device and the consumable will not change.

To this end, embodiments of the present disclosure provide an information processing device, an information processing method, a data transmission control method, consumables, an image forming device, an image forming system, and a computer-readable storage medium, which may improve the communication success rate between the consumables and the image forming device.

Embodiment 1

Some embodiments of the present disclosure provide an information processing device, which has a corresponding relationship with consumables. For example, the information processing device is set on the consumables, and the consumables are detachably installed on the image forming device. Schematically, the information processing device may be entirely set inside a consumable chip, or may be a third-party device that is entirely set outside the consumable chip, or may be partially set inside the consumable chip and partially set outside the consumable chip.

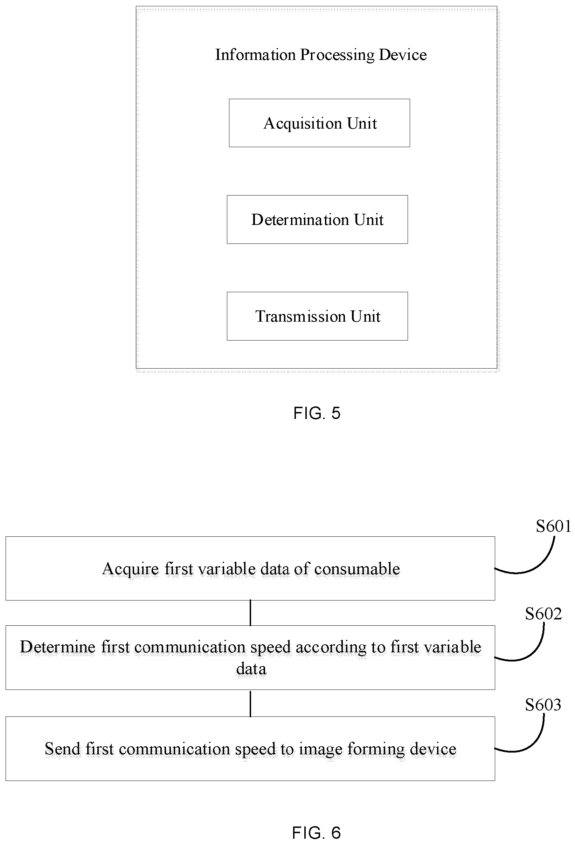

In one embodiment, refer to FIG. 5, the information processing device includes an acquisition unit, a determination unit and a transmission unit, where the transmission unit is configured to provide communication information to the image forming device, where the communication information includes a first communication speed, and the first communication speed is used to determine the data transmission rate between the image forming device and the consumables.

According to the scheme provided in the disclosed embodiment, the data transmission rate between the image forming device and a consumable is determined by the information processing device of the consumable. After obtaining the first communication speed sent by the information processing device, the image forming device adjusts the data transmission rate with the consumable according to the first communication speed, thereby increasing the probability of successful communication between the consumable and the image forming device.

For example, when the information processing device is integrally disposed inside a consumable chip, the first communication speed is used to determine the data transmission rate between the image forming device and the consumable chip. The image forming device adjusts the data transmission rate with the consumable chip according to the acquired first communication speed, which may increase the probability of successful communication between the consumable chip and the image forming device. The consumable chip may be fixedly or detachably disposed on a consumable, or fixedly or detachably disposed on the image forming device. Furthermore, when the image forming device may accommodate multiple consumables, the consumable chips and the consumables may be in a one-to-one correspondence or a one-to-many relationship.

For another example, the information processing device is a consumable chipset, see FIG. 3, the consumable chipset includes a first consumable chip 110 and a second consumable chip 120, the second consumable chip 120 is configured to determine a first communication speed, and send the first communication speed to the image forming device through the first consumable chip 110, the image forming device adjusts the data transmission rate with the first consumable chip 110 according to the acquired first communication speed, which may improve the probability of successful communication between the first consumable chip 110 or the consumable chipset and the image forming device. Alternatively, the first consumable chip 110 controls the switch between the second consumable chip 120 and the image forming device to be turned on, so that the second consumable chip 120 may send the first communication speed to the image forming device. If the switch remains turned on, the image forming device adjusts the data transmission rate with the first consumable chip 110 and/or the second consumable chip 120 according to the acquired first communication speed, which may correspondingly improve the probability of successful communication with the first consumable chip 110 and/or the second consumable chip 120. Here, the consumable chipset may be set on the consumable or the image forming device in whole or in part. For example, the first consumable chip 110 and the second consumable chip 120 are both disposed on the consumable. For another example, the first consumable chip 110 is disposed on the consumable, and the second consumable chip 120 is disposed on the image forming device. Further, when the image forming device may accommodate multiple consumables, the first consumable chip 110 and the consumable may be in a one-to-one correspondence, and the second consumable chip 120 and the consumable may be in a one-to-one correspondence or a one-to-many relationship.

For another example, when the image forming device may accommodate multiple consumables, for some consumables, the information processing device is integrally disposed inside the consumable chip, and for other consumables, the information processing device is a consumable chipset.

It is understood that the target device for data transmission with the image forming device will be different depending on the implementation of the information processing device. For example, when the information processing device is integrally disposed inside a consumable chip, the target device for data transmission with the image forming device is the consumable chip. Adjusting the data transmission rate with the consumable according to the first communication speed is actually adjusting the data transmission rate with the target device.

In one embodiment, the information processing device further includes an acquisition unit and a determination unit, where the acquisition unit is configured to acquire the first variable data of a consumable, and the determination unit is configured to determine the first communication speed according to the first variable data. The specific method for the acquisition unit to acquire the first variable data of the consumable may be to directly read the first variable data from the information processing device or the consumable chip or other storage devices, or to read the associated data of the first variable data from the information processing device or other consumable chips or other storage devices, and obtain the first variable data based on conversion of the associated data of the first variable data. Alternatively, the acquisition unit acquires the first variable data sent by the image forming device. Specifically, the first variable data sent by the image forming device may be directly received, or may be acquired from an external device such as a transferor. That is, the external device such as the transferor first receives the first variable data sent by the image forming device, and then the acquisition unit acquires the first variable data from the external device such as the transferor. Here, the first variable data is associated with the degree of use of a consumable. For example, the first variable data may be rewritten or changed according to the degree of use of the consumable in the process of the image forming device performing the image forming operation, and/or, the first variable data may also be rewritten or changed according to the degree of use of the consumable materials included in the consumable in the preparation operation of the image forming device for performing the image forming operation. In one embodiment, the information processing device pre-stores the first variable data or data converted from the first variable data based on preset rules or an algorithm pre-stored in the information processing device. For example, when the information processing device is set as a whole inside the consumable chip, the first variable data or the converted data may be stored in the consumable chip. For another example, when the information processing device is a consumable chipset, and the consumable chipset includes a first consumable chip 110 and a second consumable chip 120, the first variable data or the converted data may be pre-stored in the first consumable chip 110 or the second consumable chip 120. In one embodiment, the image forming device sends the first variable data to the information processing device. Optionally, if the first variable data is sent by the image forming device to the information processing device, before the image forming device sends the first variable data to the information processing device, the acquisition unit is also configured to acquire a second variable data acquisition request sent by the image forming device. The transmission unit of the information processing device feeds back second variable data to the image forming device, where the second variable data is the data pre-stored by the information processing device or other consumable chips or other storage devices, or the second variable data is converted by the information processing device based on the associated data of the pre-stored second variable data. The image forming device rewrites or changes the second variable data based on the image forming operation and /or based on the preparation operation, obtains the first variable data based on the rewriting or change of the second variable data, and sends the first variable data to the information processing device.

Regarding the specific method in which the acquisition unit acquires the second variable data acquisition request sent by the image forming device, the second variable data acquisition request sent by the image forming device may be directly received, or it may be acquired from an external device such as a relay. That is, the external device such as the relay first receives the second variable data acquisition request sent by the image forming device, and then the acquisition unit acquires the second variable data acquisition request from the external device such as the relay.

The information represented by the second variable data is described in detail below. The information represented by the second variable data may represent the consumption amount of a consumable material or the remaining amount of a consumable material.

In one embodiment, when a consumable includes a developer accommodating portion, the second variable data may be associated with the developer usage level of the consumable. Exemplarily, the second variable data may be the developer consumption, the developer remaining amount, or any one of the parameters directly indicating the developer usage level, such as the number of printed pages, the number of remaining printable pages and the like obtained by converting the developer consumption or the developer remaining amount. The second variable data may not be equal to the parameter directly indicating the developer usage level, but may be consistent with the changing trend of the parameter directly indicating the developer usage level. That is, the second variable data increases with the increase of the parameter directly indicating the developer usage level or decreases with the decrease of the parameter directly indicating the developer usage level. Specifically, the second variable data may be rewritten or changed according to the developer usage level in the consumable during the image forming device performing the image forming operation, and the second variable data may also be rewritten or changed according to the developer usage level in the consumable during the preparation operation of the image forming device for performing the image forming operation. The preparation operation includes but is not limited to a color correction operation, a preheating operation, etc. Here, in the color correction operation, the image forming device first forms a specified toner image on the transfer belt, and then uses a detection device such as a color toner density sensor (referred to as CTD sensor) to detect the toner image on the transfer belt, and then performs color correction according to the detection result. In the preheating operation, the image forming device drives at least one of the OPC (e.g., photosensitive drum), developing roller, powder feeding roller, and stirring frame in the image forming device to start idling, so that the image forming device is heated to a specific temperature. It is to be understood that the developer consumption will occur in the execution of the image forming operation and in the preparation operation for the execution of the image forming operation.

In one embodiment, when a consumable includes OPC, the second variable data is associated with the OPC usage level of the consumable. Exemplarily, the second variable data may be the OPC rotation distance, the OPC remaining rotation distance, or any one of the parameters directly indicating the OPC usage level, such as the number of printed pages, the number of remaining printable pages and the like calculated based on the OPC rotation distance or converted from the remaining rotation distance. The second variable data may not be equal to the parameter directly indicating the OPC usage level, but is consistent with the changing trend of the parameter directly indicating the OPC usage level, that is, it increases with the increase of the parameter directly indicating the OPC usage level or decreases with the decrease of the parameter directly indicating the OPC usage level. Specifically, the second variable data may be rewritten or changed according to the OPC usage level during the image forming device performing the image forming operation. The second variable data may also be rewritten or changed according to the OPC usage level in the preparation operation of the image forming device for performing the image forming operation. The preparation operation includes but is not limited to color correction operation, preheating operation, etc. It is understood that the rotation consumption of the OPC is generated in the execution of the image forming operation and in the preparation operation for the execution of the image forming operation.

In one embodiment, the second variable data is associated with the usage level of a consumable chip used in conjunction with the consumable. For example, the second variable data is any one of the parameters directly indicating the usage level of the consumable chip, such as the number of times the consumable chip is powered on, the theoretical remaining number of times of power-on, the theoretical remaining power-on time, and the cumulative power-on time. The second variable data may not be equal to the parameter directly indicating the usage level of the consumable chip, but may be consistent with the changing trend of the parameter directly indicating the usage level of the consumable chip, that is, it increases with the increase of the parameter directly indicating the usage level of the consumable chip or decreases with the decrease of the parameter directly indicating the usage level of the consumable chip.

In one embodiment, the second variable data is associated with the consumption of at least two of the developer, OPC and the consumable chip, or the second variable data is associated with the remaining amount of at least two of the developer, OPC and the consumable chip. Exemplarily, the second variable data increases with the increase of both the number of printed pages and the number of times the consumable chip is powered on.

It may be understood that the parameter information such as the developer consumption, the number of printed pages, the OPC rotation distance, the number of times of power-on of the consumable chip and the cumulative power-on time of the consumable chip, which have larger values as the consumable is used more, is the consumption amount. The parameter information such as the remaining developer amount, the remaining number of printable pages, the remaining OPC rotation distance, the theoretical remaining number of times of power-on, the theoretical remaining power-on time, which have smaller values as the consumable is used more, is the remaining amount.

It should be noted that the second variable data may reflect the degree of use of a consumable. When the developer in the consumable is not replenished and replaced, or the OPC in the consumable is not replaced, or the consumable chip used in conjunction with the consumable is not replaced, the corresponding second variable data generally changes in a same fixed direction. That is, the second variable data becomes larger as the degree of use of the consumable increases, or the second variable data becomes smaller as the degree of use of the consumable increases.

Apparently, the second variable data may also be associated with other parameters that may represent the degree of consumable usage, for example, it may be associated with consumable abnormal statistical data. Further, the consumable abnormal statistical data may be the number of communication failures between the image forming device and the consumable chip, or the number of successful communication but failed information processing, which is not limited in the embodiments of the present disclosure, as long as the second variable data reflects the degree of consumable usage.

The information represented by the first variable data may refer to the detailed description of the information represented by the second variable data. Since the first variable data may be obtained from the second variable data, the information represented by the first variable data may be consistent with the information represented by the second variable data. For example, both the first variable data and the second variable data represent the developer consumption. After the acquisition unit of the information processing device receives the second variable data acquisition request sent by the image forming device, the transmission unit of the information processing device feeds back the second variable data representing the developer consumption to the image forming device. The image forming device generates developer consumption based on the image forming operation and/or the preparation operation, and then adds the generated developer consumption increment to the second variable data to obtain the first variable data representing the new developer consumption, and sends the first variable data to the information processing device. The information represented by the first variable data may also be inconsistent with the information represented by the second variable data. Specifically, when there is a mapping relationship between different representation information, different representation information may be converted to each other. For example, the first variable data is the developer consumption, and the second variable data is the number of printed pages. The developer consumption has a mapping relationship with the number of printed pages. After the acquisition unit of the information processing device receives the second variable data acquisition request sent by the image forming device, the transmission unit of the information processing device feeds back the second variable data representing the developer consumption to the image forming device. The image forming device generates developer consumption based on the image forming operation or the preparation operation, and then adds the generated developer consumption increment to the second variable data, and obtains the first variable data representing the new number of printed pages based on the mapping relationship between the developer consumption information and the number of printed pages, and sends the first variable data to the information processing device.

A determination unit is configured to determine a first communication speed based on first variable data.

It should be noted that the determination unit determines the first communication speed based on the first variable data, which may include the following understandings:

First: After the acquisition unit acquires the first variable data, the determination unit determines the first communication speed based on the first variable data.

Second: After the acquisition unit acquires the first variable data, the determination unit determines the first communication speed according to a preset rule, and the present disclosure does not specifically limit the preset rule.

The first way of understanding is explained below.

In one embodiment, the determination unit determines the first communication speed directly based on the first variable data.

Exemplarily, the determination unit directly determines the first communication speed based on the first variable data according to the following implementations:

Mode a: The determination unit divides values of the first variable data into intervals, different intervals of values of the first variable data correspond to different first communication speeds, and the first communication speed is determined according to the interval corresponding to the value of the first variable data.

Exemplarily, when the first variable data is the accumulated power-on time, the consumable chip records its own accumulated power-on time, and uses different first communication speeds in different time periods. Exemplarily, the accumulated power-on time may be divided into three time periods as shown in the following table, and different first communication speeds correspond to different time periods. The corresponding first communication speed may be selected according to the current accumulated power-on time period.

| Power-on cumulative time period | First communication speed |
| --- | --- |
| 0-100 hours | 400K |
| 100-500 hours | 200K |
| 500 hours-lifespan | 100K |

Exemplarily, when the number of printed pages is used as the first variable data, different first communication speeds are used in different intervals of the number of printed pages. For example, the number of printed pages may be divided into three intervals as shown in the following table, and different first communication speeds correspond to different intervals. The corresponding first communication speed may be selected according to the current number of printed pages.

| Number of printed pages | First communication speed |
| --- | --- |
| 0-5000 pages | 400K |
| 5001-10000 pages | 200K |
| 10001-15000 pages | 100K |

Mode b: Determine the first communication speed through a calculation formula based on the first variable data.

Exemplarily, the first communication speed may be calculated using the following Formula (1):

$$\text{First communication speed} = ((\text{theoretical lifetime} - \text{cumulative power-on time}) / \text{theoretical lifetime}) * \text{theoretical communication speed} \quad (1)$$

However, the first communication speed calculated by Formula (1) cannot approach 0 infinitely. When the calculated first communication speed is less than the minimum communication speed, the information processing device uses the minimum communication speed as the first communication speed.

Exemplarily, when the first variable data is the remaining amount of developer, the chip control unit is further configured to determine the first communication speed according to the remaining developer information. The remaining developer information is usually the remaining developer ratio or the remaining developer amount of the current consumable, which may generally be obtained by subtracting the current developer consumption from the total developer amount, or may be directly obtained by pre-stored data in the memory. Exemplarily, the first communication speed may be calculated using the following Formula (2):

$$\text{The first communication speed} = (\text{remaining developer amount} / \text{total developer amount}) * \text{theoretical communication speed} \quad (2)$$

The theoretical communication speed is usually the maximum reliable communication speed supported by the image forming device and the target device when the contact between the image forming device and the target device is stable and reliable, that is, the maximum reliable communication speed supported by the image forming device and the target device when the consumable is not used and the first variable data has not changed.

Exemplarily, when the first variable data is the number of remaining printable pages, the chip control unit may determine the first communication speed according to the number of remaining printable pages. Exemplarily, the first communication speed may be calculated using the following Formula (3):

First communication speed = (number of remaining printable pages / theoretical total number of printable pages of consumable chip) * theoretical communication speed (3) (3)

Here, the theoretical total number of printable pages of the consumable chip is usually the total number of pages theoretically supported by the consumable chip for printing. Those skilled in the art may determine the total number of pages theoretically supported by the consumable chip for printing according to any well-known method, which will not be repeated here.

In one embodiment, the determination unit is specifically configured to first determine a value of a change degree of the first variable data, and then determine the first communication speed based on the value of the change degree of the first variable data.

In one embodiment, the determination unit is specifically configured to first determine a change degree of the first variable data, and then determine the first communication speed based on the change degree of the first variable data. Mode c: The determination unit divides the values of the change degree of the first variable data into intervals, different intervals of values of the change degree of the first variable data correspond to different first communication speeds, and the first communication speed is determined according to the interval corresponding to the value of the first variable data. That is, the communication speed that has a preset corresponding relationship with the value of the change degree of the first variable data is used as the first communication speed.

Exemplarily, when the first variable data is the number of pages printed, the number of pages printed is compared with the theoretical total number of printable pages to obtain the ratio of the first variable data to the original total amount of the first variable data, that is, the value of the change degree of the first variable data. Different first communication speeds are used in different ratio intervals. For example, the ratio may be divided into three intervals as shown in the following table, and different first communication speeds correspond to different intervals; the corresponding first communication speed may be selected according to the currently calculated ratio.

| Number of pages printed / theoretical total number of printable pages | First communication speed |
| --- | --- |
| [0%, 30%) | 400K |
| [30%, 60%) | 200K |
| [60%, 100%] | 100K |

Mode d: Determine the first communication speed through a calculation formula based on the value of the change degree of the first variable data.

Exemplarily, when the first variable data is the remaining amount of developer, based on the method for calculating the change degree of the first variable data, the value of the remaining amount of developer is set to A, the value of the total capacity of the developer is set to B, the value of the change degree of the first variable data is determined based on A/B, and the value of the change degree of the first variable data is set to C. The first communication speed may be calculated using the following Formula (4):

$$\text{First communication speed} = C * \text{theoretical communication speed} \qquad (4)$$

However, in practice, the first communication speed cannot approach zero infinitely. After the calculated first communication speed is less than the minimum communication speed, the information processing device uses the minimum communication speed as the first communication speed.

The second way of understanding is explained below.

The determination unit may determine the first communication speed not based on the first variable data. For example, the acquisition unit triggers the determination unit to determine the first communication speed using a preset rule after acquiring the first variable data. Exemplarily, the determination unit determines the first communication speed based on the associated data of the first variable data, such as determining the first communication speed based on other data with an error within a preset range with the first variable data, such as determining the first communication speed based on the conversion data of the first variable data. Exemplarily, the information processing device predetermines the predetermined communication speed based on the associated data of the first variable data or other rules before the acquisition unit acquires the first variable data, triggers the determination unit after the acquisition unit acquires the first variable data, and determines the predetermined communication speed as the first communication speed after the acquisition unit acquires the first variable data. It should be noted that the embodiments of the present disclosure merely need to ensure that the first communication speed corresponds to the first variable data, and the specific manner in which the determination unit determines the first communication speed based on the first variable data is not limited.

Based on the above two understandings, the information processing device uses the communication speed having a preset corresponding relationship with the first variable data as the first communication speed.

The determination of the change degree of the first variable data by the determination unit is described in detail below.

The change degree of the first variable data refers to the change degree of the first variable data relative to the original total amount, and the original sum of the first variable data is used to indicate the maximum degree to which the first variable data may change. For example, the original sum of the consumed amount of developer of the consumable and the remaining amount of developer of the consumable is the total developer capacity of the consumable. The original sum of the OPC rotated distance and the remaining OPC rotation distance is the total OPC rotation distance. The original sum of the number of pages printed by the consumable and the remaining printable pages of the consumable is the theoretical total number of pages that the consumable may support printing, that is, the life of the consumable. The original sum of the number of times of powered-on of the consumable chip and the theoretical remaining times of power-on is the total power-on times of the consumable chip. The original sum of the power-on accumulated time of the consumable chip and the theoretical remaining power-on time is the theoretical lifetime of the consumable chip. When the first variable data is associated with the consumption of at least two of the developer, OPC and consumable chip, the original sum of the first variable data may be determined based on the original sum corresponding to the consumption of any one of the at least two, or may be determined based on the original sums corresponding to the consumption of the at least two. When the first variable data is associated with the remaining amount of at least two of the developer, OPC and consumable chip, the original sum of the first variable data may be determined based on the original sum corresponding to the remaining amount of any one of the at least two, or may be determined based on the original sums corresponding to the remaining amounts of the at least two. It should be noted that when the first variable data is associated with the consumption, the closer the value of the first variable data is to the original total amount, the greater the change degree of the first variable data is. When the first variable data is associated with the remaining amount, the closer the value of the first variable data is to zero, the greater the change degree of the first variable data is. Specifically, the determination unit may determine the value of the change degree of the first variable data based on the ratio. When the first variable data is related to the consumption, the larger the ratio is, the greater the change degree of the first variable data is. When the first variable data is related to the remaining amount, the smaller the ratio is, the greater the change degree of the first variable data is. For example, assuming that the value of the first variable data is A and the value of the original total amount of the first variable data is B, the determination unit may determine the value of the change degree of the first variable data based on A/B. When the first variable data is associated with the remaining amount of at least two of the developer, OPC and consumable chip, the change degree of the first variable data may be determined based on the smaller ratio of the ratios of the first variable data and the original total amounts corresponding to the remaining amounts of the at least two. For example, assuming that the value of the first variable data is A, and the original total amounts corresponding to the remaining amounts of the at least two are C and D, respectively, where A/C is greater than A/D, the determination unit may determine the value of the change degree of the first variable data based on A/D. When the first variable data is associated with the consumption of at least two of the developer, OPC and consumable chip, the change degree of the first variable data may be determined based on the larger ratio of the ratios of the first variable data and the original total amounts corresponding to the consumption of the at least two. In one embodiment, the information processing device may determine a value with the value difference, compared to the ratio of the first variable data to the original total amount of the first variable data, within a preset range as the value of the change degree of the first variable data. For example, the first variable data is A, the value of the original total amount of the first variable data is B, and the preset difference is E. The value of the change degree of the first variable data may be determined as any value in the interval [A/B-E, A/B+E]. In some embodiments, the information processing device may determine a value that is equal to the ratio of the first variable data to the original total amount of the first variable data as the value of the change degree of the first variable data. Apparently, the determination unit may also determine the value of the change degree of the first variable data in other ways, for example, based on the associated data of the value of the first variable data and the associated data of the original total amount of the first variable data; or based on the corresponding relationship between the value of the first variable data and the value of the change degree of the first variable data; or based on the relationship between the value of the first variable data and the original total amount of the first variable data, or based on other preset algorithms as long as an algorithm makes the value of the change degree of the first variable data the same as the ratio of the first variable data to the original total amount of the first variable data. The embodiment of the present disclosure does not limit the way in which the determination unit determines the value of the change degree of the first variable data.

The transmission unit is configured to send the first communication speed to the image forming device.

After the information processing device determines the first communication speed, the first communication speed may be sent to the image forming device. The first communication speed is used to determine the data transmission rate between the image forming device and the target device. Specifically, the first communication speed may be used to determine the transmission rate of specific data between the image forming device and the target device, or the transmission rate of data in a specific time period between the image forming device and the target device, or the transmission rate of all data between the image forming device and the target device, until the next time the determination unit of the information processing device re-determines a new first communication speed.

Since the factors that lead to communication failure with the image forming device gradually accumulate during the entire life cycle of a consumable, there will be different probabilities of successful communication at different stages of consumable use. At the same time, the probability of successful communication is related to the communication speed at which the image forming device initiates communication. Therefore, the solutions provided in the above embodiments associate the first communication speed with data reflecting the degree of use of the consumable. The information processing device may determine the first communication speed based on the use of the consumable, which may further improve the probability of successful communication between the image forming device and the target device.

Regarding the specific method of the transmission unit sending the first communication speed to the image forming device, the transmission unit may send the first communication speed directly to the image forming device, or the transmission unit may forward the first communication speed to the image forming device through an external device such as a relay. That is, the transmission unit first sends the first communication speed to an external device such as a relay, and then the external device sends the first communication speed to the image forming device.

In one embodiment, there are multiple ways for the transmission unit of the information processing device to directly or indirectly transmit the first communication speed to the image forming device, such as through data frame transmission or by the information processing device occupying a communication line.

Take where the information processing device is set inside a consumable chip, and the consumable chip is connected to the image forming device through an inter-integrated circuit (IIC) bus as an example. There are two signal lines in the IIC bus, namely the bidirectional data line SDA and the clock line SCL. In the data frame transmission method, after the information processing device is powered on or receives the first communication speed acquisition request sent by the image forming device, the information processing device encapsulates the information including the first communication speed into a protocol-parseable data frame, and transmits it to the image forming device through the bidirectional data line SDA. This transmission method is not limited by time. When the image forming device needs the first communication speed, it may send a corresponding request to the information processing device, and the communication is flexible.

In the method of occupying a communication line, the determination unit in the information processing device may calculate the corresponding occupancy time according to the first communication speed. For example, when the first communication speed of the consumable chip is 400K, the time T that the consumable chip needs to occupy the clock line SCL is 10 ms. When the IIC bus is idle, the clock line SCL is pulled high. When the consumable chip is powered on, the control module of the transmission unit controls the chip pin voltage connected to the clock line SCL to be pulled low and lasts for the corresponding occupancy time. The image forming device converts the first communication speed by monitoring the time that the consumable chip occupies the clock line SCL. Using this transmission method may make data transmission simpler, faster and more reliable.

In one embodiment, when the transmission unit of the information processing device transmits the first communication speed, in addition to transmitting the first communication speed, the transmission unit may also simultaneously transmit identification information of the information processing device or the consumable chip, which may be the serial ID number of the consumable chip, the consumable chip address, or the coded information representing the location of the corresponding consumable. That is, the image forming device may know which consumable corresponds to the first communication speed. The specific content of the identification information is not further limited.

The transmission unit is further configured to send the value of the change degree of the first variable data to the image forming device.

After the determination unit determines the value of the change degree of the first variable data, the transmission unit may be configured to send the value of the change degree of the first variable data to the image forming device.

It should be noted that the transmission unit sends the communication information and the value of the change degree of the first variable data to the image forming device in a manner that the transmission unit directly sends the communication information and the value of the change degree of the first variable data to the image forming device, or in a manner the transmission unit first sends the communication information and the value of the change degree of the first variable data to an external device such as a relay, and then forwards them to the image forming device via the external device such as the relay.

In the embodiments of the present disclosure, the transmission unit, the acquisition unit, and the determination unit in the information processing device may be implemented by software or hardware.

In one embodiment, at least one of the transmission unit, the acquisition unit, and the determination unit may be an external module outside a consumable chip and electrically connected to the consumable chip, and the other units are built into the chip control unit of the consumable chip. That is, the consumable includes a consumable chip and an external module electrically connected to the consumable chip.

Specifically, the transmission unit, the acquisition unit, and the determination unit may be circuit units including devices such as FPGA, MCU, DSP, etc. The transmission unit may also realize its function by building a specific waveform generator circuit, and the acquisition unit and the determination unit may also realize the corresponding functions by building a digital logic calculator. This disclosure does not further limit the specific implementation form of each unit.

In one embodiment, the transmission unit, the acquisition unit and the determination unit are all included in the consumable chip.

In one embodiment, the transmission unit, the acquisition unit, and the determination unit are included in a chip control unit of the first chip.

In one embodiment, the transmission unit, the acquisition unit, and the determination unit are other modules, provided on the consumable, that are different from the consumable chip, which is not limited in the present disclosure.

In one embodiment, the transmission unit, the acquisition unit, and the determination unit are respectively disposed on two or more different consumable chips that may communicate with each other. In some embodiments, the transmission unit and the acquisition unit are disposed on the first consumable chip, and the determination unit is disposed on the second consumable chip. After the acquisition unit of the first consumable chip acquires the first variable data of the consumable chip, the first variable data or the parsed data of the first variable data is forwarded to the second consumable chip. The determination unit of the second consumable chip determines the first communication speed according to the first variable data or the parsed data of the first variable data, and sends the first communication speed to the first consumable chip. The transmission unit of the first consumable chip outputs the first communication speed to the image forming device. Apparently, those skilled in the art may also arrange the transmission unit, the acquisition unit, and the determination unit on different consumable chips in other ways, which is not limited in the present disclosure.

It should be noted that the specific contents involved in the embodiments of the present disclosure may be found in the above description, and for the sake of brevity, these details will not be repeated here.

Embodiment 2

The embodiments of the present disclosure provide an information processing device based on Embodiment 1. Compared with the information processing device provided in Embodiment 1, the acquisition unit is further configured to receive verifying variable data sent by the image forming device; the determination unit is further configured to determine a verifying first communication speed based on the verifying variable data; and the transmission unit is further configured to send the verifying first communication speed to the image forming device.

It should be noted that the specific manner in which the determination unit in Embodiment 2 of the present disclosure determines the verifying first communication speed based on the verifying variable data may refer to the specific manner in which the determination unit in Embodiment 1 determines the first communication speed based on the first variable data. The specific implementation manner in which the transmission unit sends the verifying first communication speed to the image forming device may refer to the specific implementation manner in which the transmission unit in Embodiment 1 sends the first communication speed to the image forming device. In Embodiment 2 of the present disclosure, the verifying first communication speed is different from the first communication speed described in Embodiment 1, and the verifying variable data sent by the image forming device is also different from the first variable data. The information processing device obtains the verifying variable data sent by the image forming device, determines the verifying first communication speed based on the verifying variable data, and sends the verifying first communication speed different from the first communication speed to the image forming device. This proves that the information processing device may output different communication speeds in response to changes in the variable data, provide a reliable communication speed in subsequent communications, and is a trustworthy device.

Embodiment 3

FIG. 6 is a flow chart of an information processing method according to an embodiment of the present disclosure. The following control method is applied to an information processing device that communicates with an image forming device. The information processing method includes the following execution steps:

Step S601: Acquire first variable data of a consumable.

For details about the first variable data, refer to Embodiment 1, which will not be repeated here. Regarding the specific way in which the information processing device obtains the first variable data of a consumable, the first variable data may be directly read from the information processing device or other consumable chips or other storage devices, or the first variable data may be obtained by converting associated data of the first variable data read from the information processing device or other consumable chips or other storage devices, or the first variable data may be obtained by obtaining the first variable data sent by the image forming device. Specifically, the first variable data sent by the image forming device may be directly received, or it may be obtained from an external device such as a relay. That is, the external device such as the relay first receives the first variable data sent by the image forming device, and then the acquisition unit obtains the first variable data from the external device such as the relay.

Step S602: Determine a first communication speed according to the first variable data.

For details about how the information processing device determines the first communication speed based on the first variable data, reference may be made to the details about how the determination unit determines the first communication speed based on the first variable data in Embodiment 1, which will not be described in detail here.

Step S603: Send the first communication speed to the image forming device.

For details about how the information processing device sends the first communication speed to the image forming device, reference may be made to the details about how the transmission unit sends the first communication speed to the image forming device in Embodiment 1, which will not be described in detail here.

In one embodiment, the information processing device provides communication information to the image forming device.

The communication information includes a first communication speed, which is a communication speed with a higher probability of successful communication between the current consumable and the image forming device, so as to determine a data transmission rate between the image forming device and the consumable chip.

Furthermore, the communication information also includes identification information of the consumable, that is, when the information processing device sends the first communication speed, it may also provide identification information of the consumable, so that the image forming device may associate the acquired first communication speed with the consumable information, thereby facilitating subsequent communication with different consumables at different communication speeds.

In addition, there are many ways to provide the first communication speed to the image forming device, such as through data frame transmission or by occupying a communication line. The specific implementation method is the same as the method in which the consumable chip or information processing device transmits it to the image forming device, and will not be repeated here.

In one embodiment, before sending the first communication speed to the image forming device, the information processing device also obtains first variable data of the consumable and determines the first communication speed based on the first variable data. The description of the first variable data may be found in Embodiment 1 and will not be repeated here, and the method of determining the first communication speed based on the first variable data is the same as the method described in Embodiment 1 and will not be repeated here.

In one embodiment, when the information processing device obtains the first variable data acquisition request sent by the image forming device, the information processing device feeds back the first variable data to the image forming device, where the first variable data is used to determine whether the first communication speed provided by the chip control unit or the information processing device is legal.

Before the image forming device communicates with the consumable chip according to the first communication speed, the first communication speed provided by the consumable chip may be verified for legitimacy. Since the first communication speed is associated with the first variable data, the image forming device may obtain the first variable data from the consumable chip, and then determine whether the first communication speed provided by the consumable chip is legal based on the association between the first variable data and the first communication speed. This may further improve the probability of successful communication between the consumable chip and the image forming device.

Embodiment 4

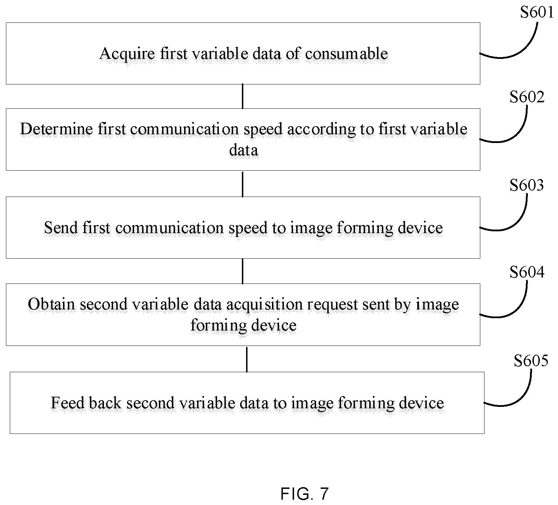

FIG. 7 is a flow chart of another information processing method according to an embodiment of the present disclosure. The following control method is applied to an information processing device that communicates with an image forming device. Based on Embodiment 3, the information processing method of Embodiment 4 includes the following execution steps.

Step S604: Obtain a second variable data acquisition request sent by the image forming device.

Regarding the specific method for the information processing device to obtain the second variable data acquisition request sent by the image forming device, the second variable data acquisition request sent by the image forming device may be directly received, or the second variable data acquisition request may be obtained from an external device such as a relay. That is, the external device such as the relay first receives the second variable data acquisition request sent by the image forming device, and then the information processing device obtains the second variable data acquisition request from the external device such as the relay.

Step S605: Feed back the second variable data to the image forming device.

For the specific content of the second variable data, refer to the specific description of the second variable data in Embodiment 1, which will not be repeated in Embodiment 4.

It should be noted that the information processing device may feed back the second variable data to the image forming device in a manner of either directly sending the second variable data to the image forming device or first sending the second variable data to an external device such as a relay and then forwarding the second variable data to the image forming device via the external device such as the relay.

After the image forming device obtains the second variable data fed back by the information processing device, the image forming device rewrites or changes the second variable data based on the image forming operation or based on the preparation operation, obtains the first variable data based on the rewriting or change of the second variable data, and sends the first variable data to the information processing device.

Steps S604 to S605 are executed before Step S601.

Embodiment 5

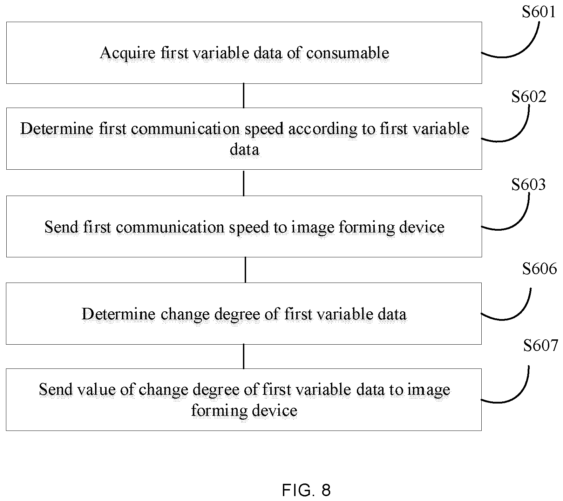

FIG. 8 is a flow chart of another information processing method according to an embodiment of the present disclosure. The following control method is applied to an information processing device that communicates with an image forming device. Based on Embodiment 3, the information processing method according to Embodiment 5 includes the following execution steps:

Step S606: Determine a change degree of the first variable data.

The manner in which the information processing device determines the change degree of the first variable data may refer to the specific manner in which the determination unit determines the change degree of the first variable data in Embodiment 1, which will not be described in detail here.

It should be noted that Step S606 may be a sub-step of Step S602, that is, the information processing device first determines the change degree of the first variable data, and then determines the first communication speed based on the change degree of the first variable data. Step S606 may also be independent of Step S602.

Step S607: Send a value of the change degree of the first variable data to the image forming device.

Step S607 may be performed simultaneously with Step S603, that is, the information processing device simultaneously sends the first communication speed and the value of the change degree of the first variable data to the image forming device through the same data frame. Step S607 may also be performed before or after Step S603.

Embodiment 6

Some embodiments of the present disclosure also provide an information processing method, which is applied to an information processing device.

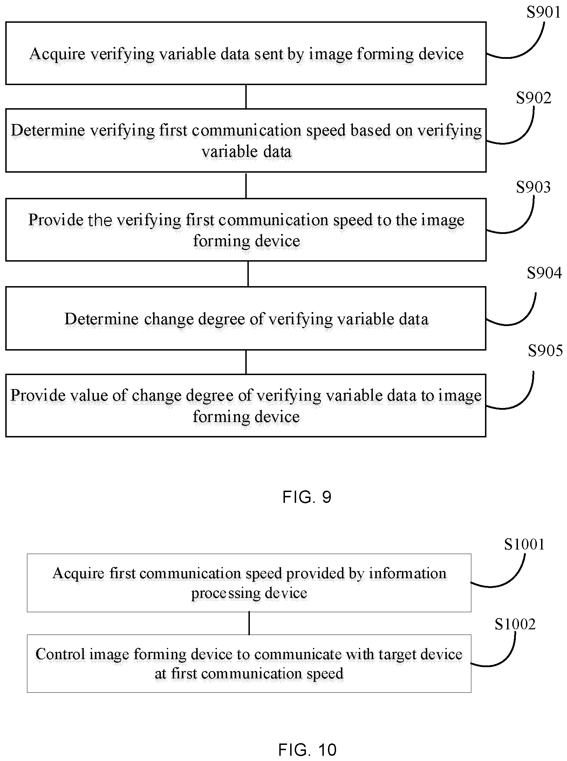

Referring to FIG. 9, compared with the information processing method provided in Embodiment 3, the information processing method provided in Embodiment 6 further includes:

Step S901: Acquire verifying variable data sent by the image forming device.

Regarding the specific method for the information processing device to obtain the verifying variable data sent by the image forming device, the verifying variable data sent by the image forming device may be directly received, or may be obtained from an external device such as a relay. That is, the external device such as the relay first receives the verifying variable data sent by the image forming device, and then the information processing device obtains the verifying variable data from the external device such as the relay.

Step S902: Determine a verifying first communication speed based on the verifying variable data.

Here, the verifying first communication speed is different from the first communication speed. The specific manner in which the information processing device determines the verifying first communication speed based on the verifying variable data may refer to the specific content of the determination unit determining the first communication speed based on the first variable data in Embodiment 1, which will not be repeated here.

Step S903: Provide the verifying first communication speed to the image forming device.

Here, the verifying first communication speed is different from the first communication speed. The specific method of the information processing device providing the verifying first communication speed to the image forming device may be that the information processing device directly sends the verifying first communication speed to the image forming device, or may be that the information processing device forwards the verifying first communication speed to the image forming device through an external device such as a relay. That is, the information processing device first sends the verifying first communication speed to an external device such as a relay, and then the external device sends the verifying first communication speed to the image forming device.

Step S904: Determine a change degree of the verifying variable data.

The specific method for the information processing device to determine the change degree of the verifying variable data is the same as the specific method for the information processing device to determine the change degree of the first variable data. Refer to the specific content of the determination unit determining the change degree of the first variable data in Embodiment 1, which will not be repeated here.

It should be noted that Step S904 may be a sub-step of Step S902, that is, the information processing device first determines the change degree of the verifying variable data, and then determines the verifying first communication speed based on the change degree of the verifying variable data. Step S904 may also be independent of Step S902.

Step S905: Provide a value of the change degree of the verifying variable data to the image forming device.

Regarding the specific manner in which the information processing device provides the verifying first communication speed to the image forming device, the information processing device may directly send the verifying first communication speed to the image forming device, or the information processing device may forward the verifying first communication speed to the image forming device through an external device such as a relay. That is, the information processing device first sends the verifying first communication speed to an external device such as a relay, and then the external device sends the verifying first communication speed to the image forming device.

It should be noted that Step S905 may be performed simultaneously with Step S903, that is, the information processing device simultaneously sends the verifying first communication speed and the value of the change degree of the verifying variable data to the image forming device through the same data frame. Step S905 may also be performed before or after Step S903.

Through Steps S901 to S905, the image forming device further verifies whether the information processing device meets expectations. That is, when the information processing device cannot correctly execute Steps S901 to S905, it means that the information processing device cannot correctly execute the preset operation or cannot correctly adjust the communication speed between the image forming device and the information processing device according to the change of variable data, which may cause abnormalities in the subsequent communication process, where the image forming device may verify that the information processing device does not meet expectations.

It should be noted that Steps S901 to S905 may be executed before Steps S601 to S607, and Steps S901 to S705 may also be executed after Steps S601 to S607.

It should be noted that the contents of the above Embodiments 3 to 6 may be combined with each other. For example, Embodiments 3 to 6 may all be combined to form one embodiment. For example, Embodiment 3 may be combined with at least one of Embodiments 4 to 6 to obtain one embodiment.

Embodiment 7

As shown in FIG. 10, some embodiments of the present disclosure further provide a data transmission control method. The following control method is executed by a controller of an image forming device. The image forming device is detachably equipped with consumable(s). The data transmission control method includes the following steps:

Step S1001: Acquire a first communication speed provided by an information processing device.

The information processing device may provide the first communication speed to the image forming device directly, or provide the first communication speed to the image forming device through indirect methods such as data forwarding. Specifically, there are many ways to obtain the first communication speed provided by the information processing device, which may include receiving and parsing data frames sent by the information processing device, or detecting the length of time the information processing device occupies the communication line and analyzing it.

Still taking the example of the information processing device and the image forming device being connected via the IIC bus, the image forming device may include a timing unit and a detection unit. In obtaining the first communication speed by detecting the length of time the information processing device occupies the communication line and analyzing it, the controller controls the image forming device to power on the information processing device. The detection unit is configured to obtain the signal on the clock line SCL. When it is detected that the information processing device generates a first preset specific signal (e.g., a falling edge) on the clock line SCL, it proves that the information processing device occupies the clock line SCL. At this moment, the timing unit starts. When it is detected that the information processing device generates a second preset specific signal (e.g., a rising edge) on the clock line SCL, it proves that the information processing device releases the clock line SCL. At this moment, the timing unit stops. The time period that the information processing device sets the clock line SCL to a low level is the occupancy time. The occupancy time may be calculated by the difference between the stop time and the start time of the timing unit.

In one embodiment, the first preset specific signal may be a low level, and the second preset specific signal may be a high level, as long as it may reflect that the information processing device occupies or releases the clock line SCL. The specific forms of the first preset specific signal and the second preset specific signal are not limited here.

Furthermore, in some embodiments, there may be multiple signal transitions between the first preset specific signal and the second preset specific signal, and the image forming device may distinguish between the preset specific signals and the common signal transitions by agreement with the information processing device or in other ways.

In addition, a timeout period (i.e., a first preset time period) may be pre-set, which may be counted from the time the information processing device is powered on. When the detection unit does not detect the first preset specific signal (e.g., a falling edge) generated by the information processing device on the clock line SCL within the first preset time period after the information processing device is powered on, then it is considered that the information processing device communicating with the image forming device is illegal and is an illegal chip, and the image forming device needs to be controlled to not to be used.

In the process of receiving and parsing the data frame sent by the information processing device to obtain the first communication speed, the controller controls the image forming device to power on the information processing device (which may be a direct power supply or an indirect power supply), and controls the image forming device to send a communication information acquisition request to the information processing device. After the information processing device obtains and parses the communication information acquisition request, it encapsulates the corresponding communication information and sends it to the image forming device, and the sent communication information includes the first communication speed. The image forming device receives and parses the communication information sent by the information processing device to obtain the first communication speed. Further, before obtaining the first communication speed of the information processing device, the image forming device does not know at what communication speed to communicate with the target device. In order to increase the probability of successful communication between the image forming device and the target device, the image forming device may be controlled to communicate with the target device at a lower communication speed (i.e., the second communication speed, where the second communication speed is less than or equal to the first communication speed). After obtaining the first communication speed, the image forming device is controlled to adjust the communication speed with the target device from the second communication speed to the first communication speed.

Alternatively, the controller controls the image forming device to power on the information processing device, and the information processing device directly sends communication information to the image forming device after power-on, and the sent communication information includes a first communication speed. The image forming device receives and parses the communication information sent by the information processing device to obtain the first communication speed.

Furthermore, timeout periods (i.e., a second preset time period and a third preset time period) may also be set. When no communication information is fed back from the information processing device within the second preset time period after a communication information acquisition request is sent to the information processing device, or within the third preset time period after the image forming device is controlled to power on the information processing device, it is considered that the information processing device communicating with the image forming device is illegal and is an illegal chip, and the image forming device needs to be controlled to not to be used.

After the image forming device obtains the first communication speed sent by the information processing device, the method may proceed to Step S1002.

Step S1002: Control the image forming device to communicate with the target device at the first communication speed.

In one embodiment, after acquiring the first communication speed sent by the information processing device, the image forming device adjusts the first communication speed and attempts to establish communication with the target device.

Furthermore, before adjusting the communication speed, the first communication speed may be subjected to a validity check. Specifically, the first variable data of the consumable is first obtained, where the method of obtaining the first variable data includes but is not limited to any one of the following methods: Method 1, directly obtaining the first variable data pre-stored in the image forming device, where the first variable data pre-stored in the image forming device may be obtained through rewriting, conversion, etc. based on the second variable data provided by the information processing device. Method 2, a request for obtaining the first variable data may be sent to the information processing device; the information processing device feeds back the corresponding first variable data according to the request of the image forming device. After obtaining the first variable data, the image forming device converts the first variable data into a theoretical communication speed according to a preset transformation relationship. When the difference between the first communication speed provided by the information processing device and the theoretical communication data obtained by the variable data conversion is within a certain preset range, it is considered that the validity check of the first communication speed has passed. If the difference between the first communication speed and the theoretical communication speed exceeds the preset range, it is considered that the received first communication speed is illegal. In some embodiments, when the first communication speed is equal to the theoretical communication speed, it is considered that the validity check of the first communication speed has passed. The description of the first variable data may be found in Embodiment 1, which will not be repeated here. Specifically, the preset transformation relationship may refer to Embodiment 1, for example, the value of the change degree of the first variable data is divided into intervals, and the first communication speed is determined according to the interval corresponding to the value of the change degree of the first variable data. It may also be a calculation formula as described in Embodiment 1, or it may be other methods different from the method of calculating the first communication speed based on the first variable data or the change degree of the first variable data by the determination unit of the information processing device described in Embodiment 1, which is not limited in the embodiments disclosed herein.

In one embodiment, after communication is established, due to a large amount of subsequent communication data, if the communication speed provided by the information processing device to the image forming device is low, the subsequent communication efficiency may be affected. Therefore, after the image forming device and the target device establish communication at the first communication speed, the communication speed may be increased by a certain proportion, for example, communicating with the target device at a third communication speed. If the communication is successful at this time, the image forming device is controlled to continue to communicate with the target device at the third communication speed. If the communication fails, the image forming device is controlled to return to the first communication speed to communicate with the target device.

In one embodiment, after the communication is established, due to a large amount of subsequent communication data, if the communication speed given by the information processing device to the image forming device is low, it may affect the subsequent communication efficiency. Therefore, the image forming device and the target device establish communication at the first communication speed merely for the transmission of important information. After the transmission of important information is completed, the communication speed may be increased by a certain proportion, for example, the communication with the target device at a third communication speed. If the communication is successful at this time, the image forming device is controlled to continue to communicate with the target device at the third communication speed. If the communication fails, the image forming device is controlled to return to the first communication speed to communicate with the target device.

In one embodiment, in addition to providing the first communication speed, the information processing device also provides identification information of the consumable so that the image forming device may establish a one-to-one correspondence between the first communication speeds and the corresponding consumables.

Further, in some embodiments, after obtaining the identification information of the consumable and the corresponding first communication speed, the image forming device may store the identification information of the consumable and the corresponding first communication speed. Next time when the first communication speed sent by the information processing device corresponding to the consumable is obtained, the stored first communication speed may be updated.

According to the image formation control methods provided by the above-mentioned embodiments, the image forming device may improve the probability of successful communication between the image forming device and the target device by acquiring the first communication speed and communicating with the target device at the first communication speed. In addition, by performing legitimacy verification before establishing communication, it may be determined whether the currently received first communication speed is legal, thereby ensuring communication security. Further, after the communication is established, an attempt may be made to increase the communication speed to improve the efficiency of subsequent communications.

Embodiment 8

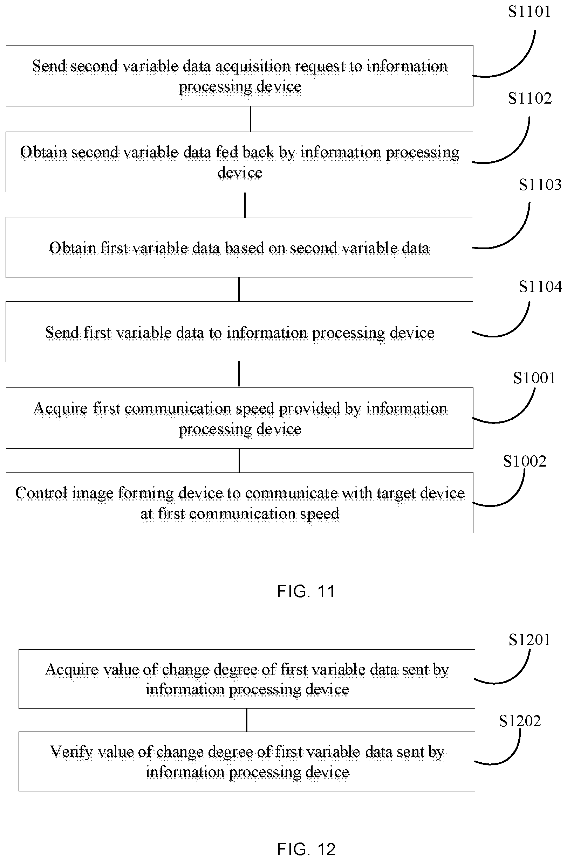

As shown in FIG. 11, a data transmission control method is further provided based on Embodiment 7.

Compared with Embodiment 7, before Step S1001, the following steps are further performed.

Step S1101: Send a second variable data acquisition request to the information processing device.

Step S1102: Obtain second variable data fed back by the information processing device.

The second variable data is data pre-stored in the information processing device or other storage devices, or the second variable data is converted by the information processing device based on associated data of the pre-stored second variable data.

Step S1103: Obtain first variable data based on the second variable data.

The specific process of the image forming device obtaining the first variable data based on the second variable data may include obtaining the first variable data based on the second variable data and the preset mapping relationship, or obtaining the first variable data by changing the second variable data based on the image forming operation or the preparation operation.

Step S1104: Send the first variable data to the information processing device.

Embodiment 9

As shown in FIG. 12, a data transmission control method is further provided based on Embodiment 8.

Compared with Embodiment 7, the data transmission control method disclosed herein further includes:

Step S1201: Acquire a value of the change degree of the first variable data sent by the information processing device.

Step S1202: Verify the value of the change degree of the first variable data sent by the information processing device.

Furthermore, before adjusting the communication speed, the value of the change degree of the first variable data may be subjected to a validity check. Specifically, first obtain the first variable data of the consumable, and then obtain a reference value of the change degree of the first variable data based on the first variable data. For details, refer to the specific content of the determination unit determining the value of the change degree of the first variable data in Embodiment 1, which will not be repeated here. When the difference between the value of the change degree of the first variable data sent by the information processing device and the reference value is within a certain preset range, it is considered that the validity check of the value of the change degree of the first variable data sent by the information processing device has passed. If the difference between the value of the change degree of the first variable data sent by the information processing device and the reference value exceeds the preset interval, it is considered that the value of the change degree of the first variable data sent by the received information processing device is illegal. In some embodiments, when the value of the change degree of the first variable data sent by the information processing device is equal to the reference value, it is considered that the validity check of the value of the change degree of the first variable data sent by the information processing device has passed.

Embodiment 10

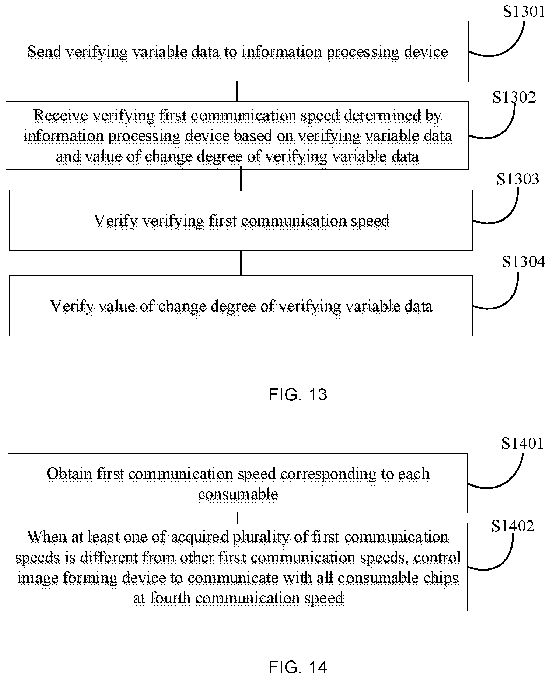

As shown in FIG. 13, a data transmission control method is further provided based on Embodiment 7.
Compared with Embodiment 7, the data transmission control method disclosed herein further includes:

Step S1301: Send verifying variable data to the information processing device. Here, the communication speed corresponding to the verifying variable data is different from the communication speed corresponding to the first variable data.

Step S1302: Receive a verifying first communication speed determined by the information processing device based on the verifying variable data and the value of the change degree of the verifying variable data.

Step S1303: Verify the verifying first communication speed.

Step S1304: Verify the value of the change degree of the verifying variable data.

Specifically, the image forming device may first obtain the verifying second communication speed corresponding to the verifying variable data. The specific process of the image forming device obtaining the verifying second communication speed corresponding to the verifying variable data based on the verifying variable data may refer to the specific process of the determination unit obtaining the first communication speed based on the first variable data in Embodiment 1, which will not be repeated here. The image forming device compares whether the verifying second communication speed is consistent with the verifying first communication speed to determine whether the verifying first communication speed meets expectations. If the verifying second communication speed is consistent with the verifying first communication speed, the verifying first communication speed meets expectations. If the verifying second communication speed is inconsistent with the verifying first communication speed, the verifying first communication speed does not meet expectations. Further, when the verifying first communication speed does not meet expectations, an error may be reported.
The image forming device obtains the original total amount of the first variable data of the consumable, and obtains the reference value of the change degree of the verifying variable data based on the verifying variable data and the original total amount of the first variable data. The specific process of the image forming device obtaining the reference value of the change degree of the verifying variable data may refer to the specific process of the determination unit obtaining the value of the change degree of the first variable data based on the first variable data in Embodiment 1, which will not be repeated here. Here, the image forming device may obtain the original total amount of the first variable data of the consumable from the information processing device or the consumable chip, or may obtain the original total amount of the first variable data from its own pre-stored information. The image forming device compares the reference value of the change degree of the verifying variable data with the value of the change degree of the received verifying variable data, and determines whether they are consistent, so as to determine whether the value of the change degree of the verifying variable data sent by the information processing device meets expectations. If the reference value of the change degree of the verifying variable data and the value of the change degree of the received verifying variable data are consistent, the value of the change degree of the verifying variable data sent by the information processing device meets expectations, and if the reference value of the change degree of the verifying variable data and the value of the change degree of the received verifying variable data are inconsistent, the value of the change degree of the verifying variable data sent by the information processing device does not meet expectations. Further, when the value of the change degree of the verifying variable data sent by the information processing device does not meet expectations, an error may be reported.

It should be noted that Step S1303 may be performed after Step S1304 or before Step S1304. If the first communication speed and the verifying first communication speed are successfully verified, Step S1002 is executed.

Executing Steps S1301 to S1304 may enable the image forming device to further verify whether the information processing device meets expectations. When the information processing device cannot respond correctly, it means that the information processing device cannot correctly perform the preset operation or cannot correctly adjust the communication speed between the image forming device and the target device according to the change of variable data. Abnormalities may occur in the subsequent communication process, in which the image forming device may verify that the information processing device does not meet expectations.

Embodiment 11

As shown in FIG. 14, some embodiments of the present disclosure further provide a data transmission control method, which is applied to an image forming device and is applicable to an architecture in which the image forming device communicates with multiple consumables, where the image forming device may be respectively connected to and communicated with information processing devices corresponding to each consumable, and may also be connected to and communicated with information processing devices corresponding to all consumables through a bus. The image forming device may communicate with an information processing device corresponding to one of the consumables through the bus, or may communicate with information processing devices corresponding to all consumables on the bus in a broadcasting manner. In the data transmission control method provided in the embodiment disclosed herein, the execution process may include the following steps:

Step S1401: Obtain a first communication speed corresponding to each consumable.

The first communication speed may be included in the obtained communication information, corresponding to each consumable, sent by the information processing device corresponding to each consumable. The communication information may also include identification information of each consumable. The first communication speed of each consumable may be the same or different. The image forming device may obtain the first communication speed by receiving and parsing the data frame, or by detecting the occupancy time of the information processing device corresponding to each consumable on the bus and parsing the data frame. The specific method is determined according to the information transmission method of the information processing device corresponding to the consumable.

Take the IIC bus connection, the consumables and the information processing device are one-to-one corresponding, and the information processing devices are set in the consumable chips as an example. At this moment, there are more than two consumable chips connected to the bus (e.g., consumable chip 1 and consumable chip 2). At this moment, consumable chip 1 transmits communication information by occupying the communication line. The communication information includes the first communication speed (e.g., the first communication speed is 400K, and the corresponding communication line occupancy time is 100 ms) and the identification information of the consumable chip. When it is detected that the current bus is idle, the following schemes may be used for transmission:

Scheme 1: Consumable chip 1 first pulls down the clock line SCL for 10 ms to indicate that the current clock line is occupied by consumable chip 1, and then pulls it down again for 100 ms to indicate that the first communication speed of consumable chip 1 is 400K.

Scheme 2: Consumable chip 1 pulls down the clock line SCL for 110 ms to indicate that the clock line is currently occupied by consumable chip 1, and the first communication speed is 400K.

Scheme 3: Consumable chip 1 generates a pulse signal on the clock line SCL to send the consumable chip address, and then pulls down the clock line for 100 ms to indicate that the first communication speed of consumable chip 1 is 400K.

Scheme 4: Consumable chip 1 and consumable chip 2 occupy the clock line SCL in sequence.

Correspondingly, the image forming device performs analysis according to the data transmission scheme of the consumable chip to obtain the identification information of the consumable chip and the corresponding first communication speed.

In addition, the image forming device may broadcast on the bus, to request each consumable chip on the bus to feed back the first communication speed, or may individually query a certain consumable chip on the bus to request it to feed back the first communication speed.

Step S1402: When at least one of the acquired plurality of first communication speeds is different from the other first communication speeds, control the image forming device to communicate with all consumable chips at a fourth communication speed.

In one embodiment, when the multiple communication speeds acquired by the image forming device are different, in order to ensure that the image forming device can successfully establish communication with all consumables, the image forming device may communicate with all consumables at the minimum communication speed (i.e., the fourth communication speed) among the multiple communication speeds. When communicating with a specific consumable, the first communication speed corresponding to the consumable may still be used for communication. In this situation, it is not required that the image forming device maintains a uniform communication speed with each consumable.

In one embodiment, when the multiple first communication speeds acquired by the image forming device are all the same, the image forming device may be controlled to communicate with all consumables at the first communication speed.

By adopting the schemes provided in the disclosed embodiments, the image forming device may communicate with the consumables connected to the communication line in the form of unicast or broadcast, and select the corresponding communication speed according to the different communication forms, which improves the communication success rate with the consumables while ensuring the communication efficiency.

It should be noted that the contents of Embodiments 7 to 11 may be combined with each other. For example, Embodiments 7 to 11 may all be combined to form one embodiment. For example, Embodiment 7 may be combined with at least one of Embodiments 8 to 11 to obtain one embodiment.

According to the schemes provided by the disclosed embodiment, it should be noted that, since the information processing device is used in conjunction with the consumables by being installed on the consumables, the information obtained by the image forming device from the consumables, such as the first communication speed, the second variable data, the verifying first communication speed, and the value of the change degree of the first variable data, are all provided by the information processing devices corresponding to the consumables. The information sent by the image forming device to the consumables, such as the first variable data, the variable data acquisition request, the verifying variable data, etc., are all obtained from the information processing devices corresponding to the consumables.

It should be also noted that, when there is a many-to-one relationship between consumables and information processing devices, for example, the image forming device may be installed with six consumables, one of which is provided with an information processing device, and the information processing device processes the information between the six consumables and the image forming device. For example, the image forming device may successively obtain the first communication speeds corresponding to the six consumables from the information processing device. The image forming device verifies the first communication speeds respectively, and if any first communication speed is successfully verified, the data transmission rate between the image forming device and the corresponding consumable is set according to the first communication speed.

Corresponding to the above embodiments, an embodiment of the present disclosure also provides a consumable.

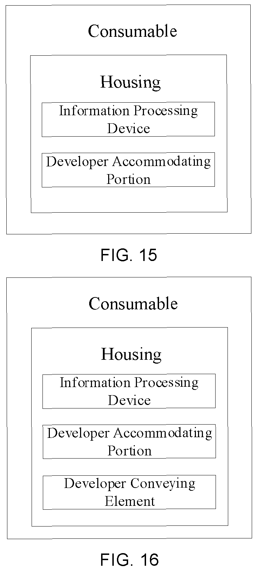

FIG. 15 is a schematic structural diagram of a consumable in accordance with an embodiment of the present disclosure. As shown in FIG. 15, the consumable includes a housing; a developer accommodating portion located in the housing for containing the developer; and an information processing device described in the above embodiments.

FIG. 16 is a schematic structural diagram of another consumable in accordance with an embodiment of the present disclosure. As shown in FIG. 16, based on the embodiment shown in FIG. 15, the consumable further includes a developer conveying unit for conveying the developer.

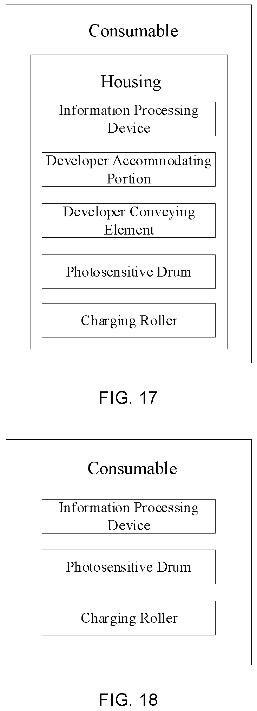

FIG. 17 is a schematic structural diagram of another consumable in accordance with an embodiment of the present disclosure. As shown in FIG. 17, based on the embodiment shown in FIG. 16, the consumable further includes a photosensitive drum and a charging roller for charging the photosensitive drum.

FIG. 18 is a schematic structural diagram of another consumable in accordance with an embodiment of the present disclosure. As shown in FIG. 18, the consumable includes a photosensitive drum, a charging roller for charging the photosensitive drum, and an information processing device in the above embodiments.

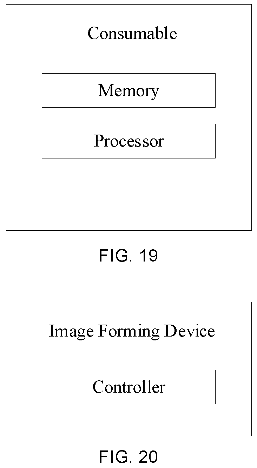

FIG. 19 is a schematic structural diagram of another consumable in accordance with an embodiment of the present disclosure. As shown in FIG. 19, the consumable includes a memory, and a processor coupled to the memory, the processor being configured to execute the information processing methods of the disclosed embodiments based on instructions stored in the memory.

The information processing method in the embodiments shown in FIGS. 15 to 19 may be found in the descriptions of the above embodiments. For the sake of brevity, they will not be repeated here.

Corresponding to the above embodiments, the embodiments of the present disclosure also provide a controller applied to an image forming device, which includes an acquisition module for acquiring a first communication speed of a consumable chip; and a control module for controlling the image forming device to communicate with a consumable chip at a communication speed.

Corresponding to the above embodiments, the embodiments of the present disclosure further provide an image forming device.

FIG. 20 is a structural block diagram of an image forming device in accordance with an embodiment of the present disclosure. As shown in FIG. 20, the image forming device includes a controller, and the controller is configured to execute part or all of the methods in the above data transmission control method embodiments.

It should be noted that the specific contents involved in the embodiments disclosed herein may be found in the description of the foregoing embodiments, and for the sake of brevity, the details will not be repeated here.

Corresponding to the above embodiments, the embodiments of the present disclosure further provide an image forming system, which includes the consumables mentioned in the above embodiments and the image forming device mentioned in the above embodiments, where the image forming device and the consumable chip are communicatively connected.

It should be noted that the specific contents involved in the embodiments disclosed herein may be found in the description of the foregoing embodiments, and for the sake of brevity, the details will not be repeated here.

Corresponding to the above embodiments, the embodiments of the present disclosure further provide a computer-readable storage medium, where the computer-readable storage medium may store a program, where when the program is executed, the device where the computer-readable storage medium is located may be controlled to execute some or all of the steps in the above method embodiments. In a specific implementation, the computer-readable storage medium may be a magnetic disk, an optical disk, a read-only memory (ROM) or a random access memory (RAM).

Corresponding to the above embodiments, the embodiments of the present disclosure further provide a computer program product, which includes executable instructions. When the executable instructions are executed on a computer, the computer executes some or all of the steps in the above method embodiments.

In the embodiments of the present disclosure, "at least one" refers to one or more, and "more than one" refers to two or more. "And/or" describes the association relationship of associated objects, indicating that three relationships may exist. For example, A and/or B may represent the existence of A alone, the existence of A and B at the same time, and the existence of B alone. Here, A and B may be singular or plural. The character "/" generally indicates that the previous and subsequent associated objects are in an "or" relationship. "At least one of the following" and similar expressions refer to any combination of these items, including any combination of single or plural items. For example, at least one of a, b and c may be represented by: a, b, c, ab, ac, bc, or abc, where a, b, c may be single or multiple.

Those of ordinary skill in the art will appreciate that the various units and algorithm steps described in the embodiments disclosed herein may be implemented in a combination of electronic hardware, computer software, and electronic hardware. Whether these functions are performed in hardware or software depends on the specific application and design constraints of the technical solution. Professional and technical personnel may use different methods to implement the described functions for each specific application, but such implementation should not be considered to be beyond the scope of this disclosure.

Those skilled in the art may clearly understand that, for the convenience and brevity of description, the specific working processes of the systems, devices and units described above may refer to the corresponding processes in the method embodiments and will not be repeated here.

In some embodiments of the present disclosure, if any function is implemented in the form of a software functional unit and sold or used as an independent product, it may be stored in a computer-readable storage medium. Based on this understanding, the technical solutions of the present disclosure, or the part that contributes to the existing technologies or the part of the technical solutions, may be embodied in the form of a software product, which is stored in a storage medium and includes several instructions for a computer device (which may be a personal computer, a server, or a network device, etc.) to perform all or part of the steps of the methods of the embodiments of the present disclosure. The storage medium includes various media such as U disk, mobile hard disk, ROM, RAM, magnetic disk or optical disk, and the like that can store program codes.

The above are only some embodiments of the present disclosure. A person skilled in the art may easily think of changes or substitutions within the technical scope disclosed in the present disclosure, which should be included in the protection scope of the present disclosure. The protection scope of the present disclosure shall be based on the protection scope of the appended claims.

**Claims**

1.  An information processing device, comprising:

    an acquisition unit, configured to acquire first variable data of a consumable;
    a determination unit, configured to determine a first communication speed based on the first variable data, the first communication speed being used to determine a data transmission rate between an image forming device and the consumable, so that the data transmission rate is related to a change degree of the first variable data; and
    a transmission unit, configured to send the first communication speed to the image forming device.

**2.** The information processing device according to claim 1, wherein the determination unit is further configured to use a communication speed having a preset corresponding relationship with the first variable data as the first communication speed.

**3.** The information processing device according to claim 2, wherein:

the determination unit is further configured to determine a data interval to which the first variable data belongs; and a communication speed having a preset correspondence with the data interval is used as the first communication speed.

**4.** The information processing device according to claim 1, wherein:

the determination unit is further configured to determine the change degree of the first variable data, wherein a difference between the value of the change degree of the first variable data and a ratio of the first variable data to an original total amount of the first variable data is within a preset range; and the transmission unit is further configured to send a value of the change degree of the first variable data to the image forming device.

**5.** The information processing device according to claim 1, wherein the acquisition unit is further configured to obtain the first variable data from the image forming device.

**6.** The information processing device according to claim 1, wherein the transmission unit is further configured to feed back second variable data to the image forming device when obtaining a variable data acquisition request sent by the image forming device, wherein the second variable data is used to obtain the first variable data.

**7.** The information processing device according to claim 4, wherein the first variable data includes a quantity of printed pages, and a difference between the value of the change degree of the first variable data and a ratio of the quantity of printed pages to a theoretical total number of printable pages is within a preset range.

**8.** The information processing device according to claim 7, wherein the value of the change degree of the first variable data is the same as the ratio of the quantity of printed pages to the theoretical total number of printable pages.

**9.** The information processing device according to claim 1, wherein:

the acquisition unit is further configured to acquire verifying variable data sent by the image forming device; the determination unit is further configured to determine a verifying first communication speed based on the verifying variable data, wherein the verifying first communication speed is different from the first communication speed; and the transmission unit is further configured to send the verifying first communication speed to the image forming device.

**10.** An information processing method, comprising:

acquiring first variable data of a consumable; determining a first communication speed based on the first variable data, wherein the first communication speed is used to determine a data transmission rate between an image forming device and the consumable, so that the data transmission rate is related to a change degree of the first variable data; and sending the first communication speed to the image forming device.

**11.** The method according to claim 10, wherein determining the first communication speed based on the first variable data comprises:
taking a communication speed having a preset corresponding relationship with the first variable data as the first communication speed.

**12.** The method according to claim 11, wherein taking a communication speed having a preset corresponding relationship with the first variable data as the first communication speed comprises:

determining a data interval to which the first variable data belongs; and

taking a communication speed having a preset correspondence with the data interval as the first communication speed.

13. The method according to claim 10, further comprising:

determining the change degree of the first variable data, wherein a difference between the value of the change degree of the first variable data and a ratio of the first variable data to an original total amount of the first variable data is within a preset range; and
sensing a value of the change degree of the first variable data to the image forming device.

14. The method according to claim 10, wherein obtaining the first variable data of the consumable comprises obtaining the first variable data from the image forming device.

15. The method according to claim 10, further comprising: feeding back second variable data to the image forming device when obtaining a variable data acquisition request sent by the image forming device, wherein the second variable data is used to obtain the first variable data.

16. The method according to claim 10, wherein the first variable data includes a quantity of printed pages, and a difference between the value of the change degree of the first variable data and a ratio of the quantity of printed pages to a theoretical total number of printable pages is within a preset range.

17. The method according to claim 16, wherein the value of the change degree of the first variable data is the same as the ratio of the quantity of printed pages to the theoretical total number of printable pages.

18. The method according to claim 10, further comprising:

receiving verifying variable data sent by the image forming device;
determining a verifying first communication speed based on the verifying variable data, the verifying first communication speed being different from the first communication speed; and
sending the verifying first communication speed to the image forming device.

19. A consumable, comprising:

a housing;
a developer accommodating portion, located in the housing, for accommodating a developer; and
an information processing device according to any one of claims 1 to 9.

20. The consumable according to claim 19, further comprising:

a developer conveying element for conveying the developer.

21. The consumable according to claim 20, further comprising:

a photosensitive drum; and
a charging roller for charging the photosensitive drum.

22. A consumable, comprising:

a photosensitive drum;
a charging roller for charging the photosensitive drum; and
an information processing device according to any one of claims 1 to 9.

Image Forming System

Image Forming Device ↔ Consumable

Consumable Chip

FIG. 1

100

110

Image Forming Device

102 Memory

101 Processor

Power Supply Module

103

105

104 First Communi-cation Interface

First Power Supply Interface

Consumable Chip

111 Second Communi-cation Interface

Second Power Supply Interface

112

FIG. 2

FIG. 3

FIG. 4

Information Processing Device

Acquisition Unit

Determination Unit

Transmission Unit

FIG. 5

Acquire first variable data of consumable — S601

Determine first communication speed according to first variable data — S602

Send first communication speed to image forming device — S603

FIG. 6

S601

Acquire first variable data of consumable

S602

Determine first communication speed according to first variable data

S603

Send first communication speed to image forming device

S604

Obtain second variable data acquisition request sent by image forming device

S605

Feed back second variable data to image forming device

FIG. 7

| Acquire first variable data of consumable | S601 |
| Determine first communication speed according to first variable data | S602 |
| Send first communication speed to image forming device | S603 |
| Determine change degree of first variable data | S606 |
| Send value of change degree of first variable data to image forming device | S607 |

FIG. 8

S901

Acquire verifying variable data sent by image forming device

S902

Determine verifying first communication speed based on verifying variable data

S903

Provide the verifying first communication speed to the image forming device

S904

Determine change degree of verifying variable data

S905

Provide value of change degree of verifying variable data to image forming device

FIG. 9

S1001

Acquire first communication speed provided by information processing device

S1002

Control image forming device to communicate with target device at first communication speed

FIG. 10

Send second variable data acquisition request to information processing device — S1101

Obtain second variable data fed back by information processing device — S1102

Obtain first variable data based on second variable data — S1103

Send first variable data to information processing device — S1104

Acquire first communication speed provided by information processing device — S1001

Control image forming device to communicate with target device at first communication speed — S1002

FIG. 11

Acquire value of change degree of first variable data sent by information processing device — S1201

Verify value of change degree of first variable data sent by information processing device — S1202

FIG. 12

S1301

Send verifying variable data to information processing device

S1302

Receive verifying first communication speed determined by information processing device based on verifying variable data and value of change degree of verifying variable data

S1303

Verify verifying first communication speed

S1304

Verify value of change degree of verifying variable data

FIG. 13

S1401

Obtain first communication speed corresponding to each consumable

S1402

When at least one of acquired plurality of first communication speeds is different from other first communication speeds, control image forming device to communicate with all consumable chips at fourth communication speed

FIG. 14

Consumable

Housing

Information Processing
Device

Developer Accommodating
Portion

FIG. 15

Consumable

Housing

Information Processing
Device

Developer Accommodating
Portion

Developer Conveying
Element

FIG. 16

**Consumable**

> **Housing**
>
> Information Processing Device
>
> Developer Accommodating Portion
>
> Developer Conveying Element
>
> Photosensitive Drum
>
> Charging Roller

FIG. 17

**Consumable**

> Information Processing Device
>
> Photosensitive Drum
>
> Charging Roller

FIG. 18

Consumable

Memory

Processor

FIG. 19

Image Forming Device

Controller

FIG. 20

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/213884 A1 (ZHANG HAO [CN] ET AL) 6 July 2023 (2023-07-06) | 1-6, 9-15, 18-22 | INV. G06F3/12 |
| A | * paragraphs [0002] - [0011], [0037] - [0156]; figures 1,9-16 * | 7,8,16, 17 | ADD. B41J2/175 G03G15/08 |
| A | EP 2 969 571 B1 (OLOGN TECHNOLOGIES AG [LI]) 20 February 2019 (2019-02-20) * paragraphs [0002] - [0006], [0054] - [0055]; figure 1 * | 1-22 | |

**TECHNICAL FIELDS SEARCHED (IPC)**

G06F
B41J
G03G

The present search report has been drawn up for all claims

| Place of search | Date of completion of the search | Examiner |
|---|---|---|
| The Hague | 14 May 2025 | Limacher, Rolf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 3283

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | | Publication date |
|---|---|---|---|---|
| US 2023213884 A1 | 06-07-2023 | EP | 4205987 A1 | 05-07-2023 |
| | | US | 2023213884 A1 | 06-07-2023 |
| | | ZA | 202212892 B | 26-07-2023 |
| EP 2969571 B1 | 20-02-2019 | CA | 2907017 A1 | 18-09-2014 |
| | | CA | 2928848 A1 | 18-09-2014 |
| | | CA | 3107371 A1 | 18-09-2014 |
| | | CA | 3242267 A1 | 18-09-2014 |
| | | EP | 2969571 A1 | 20-01-2016 |
| | | EP | 3513976 A1 | 24-07-2019 |
| | | EP | 3925783 A1 | 22-12-2021 |
| | | EP | 4427941 A2 | 11-09-2024 |
| | | TW | 201501957 A | 16-01-2015 |
| | | WO | 2014141139 A1 | 18-09-2014 |

EPO FORM P0459

For more details about this annex : see Official Journal of the European Patent Office, No. 12/82